(19) Europäisches Patentamt / European Patent Office / Office européen des brevets

(11) EP 4 198 518 A1

(12) **EUROPEAN PATENT APPLICATION**
published in accordance with Art. 153(4) EPC

(43) Date of publication:
**21.06.2023 Bulletin 2023/25**

(21) Application number: **21855781.7**

(22) Date of filing: **19.02.2021**

(51) International Patent Classification (IPC):
***G01N 35/00*** *(2006.01)* ***G01N 21/27*** *(2006.01)*
***G01N 21/59*** *(2006.01)*

(52) Cooperative Patent Classification (CPC):
**G01N 21/27; G01N 21/59; G01N 35/00**

(86) International application number:
**PCT/JP2021/006352**

(87) International publication number:
**WO 2022/034702 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2020 JP 2020136572**

(71) Applicant: **HITACHI HIGH-TECH CORPORATION**
**Tokyo 105-6409 (JP)**

(72) Inventors:
- **YAMAMOTO, Kyoko**
  **Tokyo 100-8280 (JP)**
- **ADACHI, Sakuichiro**
  **Tokyo 100-8280 (JP)**
- **YABUTANI, Chie**
  **Tokyo 105-6409 (JP)**

(74) Representative: **Mewburn Ellis LLP**
**Aurora Building**
**Counterslip**
**Bristol BS1 6BX (GB)**

(54) **CALIBRATION CURVE GENERATION METHOD, AUTONOMOUS ANALYSIS DEVICE, AND CALIBRATION CURVE GENERATION PROGRAM**

(57) An object of the present invention is to suppress time and effort into generating a calibration curve while ensuring accuracy of the calibration curve in an analysis step of generating the calibration curve by using two or more standard solutions (two or more concentrations). A calibration curve generation method according to the present invention includes acquiring time course data by irradiating a mixed reaction liquid obtained by mixing one standard solution containing a component to be measured having a concentration other than a zero concentration and a reagent reacting with the component to be measured with light and measuring a turbidity change over time of the mixed reaction liquid, extracting pieces of light amount data in a plurality of different times from a fitting line obtained by complementing discrete portions of the time course data, and generating the calibration curve indicating a relationship between the plurality of pieces of light amount data and a plurality of concentrations by converting the plurality of different times into the plurality of concentrations of the component to be measured (FIG. 1).

*FIG. 1*

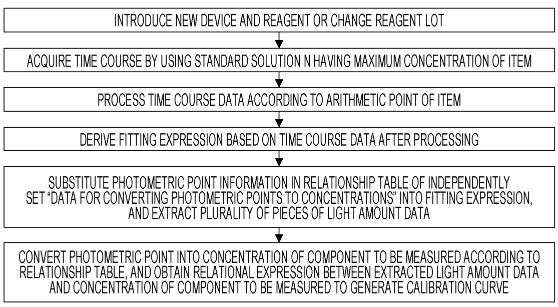


EP 4 198 518 A1

## Description

### Technical Field

The present invention relates to a technique for generating a calibration curve used when a concentration of a component to be measured contained in a sample is quantified.

### Background Art

An automatic clinical analyzer is a device that quantifies proteins, hormones, viruses, and the like contained in a biological sample (sample) such as blood or urine. In the automatic clinical analyzer, a reagent corresponding to an inspection item and a sample are mixed, a turbidity change (changes in transmitted light and scattered light) of a reaction liquid generated when a mixed reaction liquid of the sample and the reagent is irradiated with light is captured, and an absorbance or scattered light intensity of the reaction liquid for a certain time or a change amount thereof is compared with a calibration curve prepared in advance for each inspection item to quantify a concentration of a component to be measured in the sample.

The calibration curve in the automatic clinical analyzer represents a relationship between the concentration or activity of the component to be measured and the absorbance, the scattered light intensity, or the change amount thereof, and is generated by a calibration operation. The calibration is necessary to eliminate a difference between devices and a difference between reagent lots, and is essential particularly in a case where a device or a reagent is newly introduced or in a case where a reagent lot is changed.

The sample used for generating the calibration curve is a standard solution containing a component to be measured having a known concentration. The number of standard solutions varies depending on an inspection item and a reagent manufacturer, and there is also an inspection item in which there are a plurality of standard solutions containing the component to be measured at known different concentrations. In the calibration, first, the standard solutions and the reagents corresponding to the inspection items are mixed, and the mixed reaction liquid of each standard solution and each reagent is irradiated with light. As a result, a temporal turbidity change (changes in transmitted light and scattered light) of the reaction liquid is acquired as time course data. Subsequently, the absorbance, the scattered light intensity, or the change amount thereof for a certain time is extracted from the time course data of each standard solution. The calibration curve is generated by plotting the extracted data with respect to the concentration of the component to be measured in each standard solution and obtaining a relational expression between the concentration of the component to be measured and the extraction data. The number of times of measuring each standard solution at the time of generating the calibration curve (the number of times of obtaining the time course data) varies depending on the device. In a device that obtains time course data multiple times for each standard solution, an average value, a median value, or the like of the extraction data for a certain time is used.

As described above, in order to obtain the calibration curve, it is necessary to prepare a plurality of standard solutions and to acquire calibration curve generation data. These works are basically performed before the measurement of a sample having an unknown concentration of the component to be measured is started. Accordingly, in a case where there are a plurality of inspection items that require calibration, it takes time to start measurement of the sample having an unknown concentration of the component to be measured. Thus, in order to reduce a burden on the generation of the calibration curve, a technique for simplifying the generation of the calibration curve and a technique for reducing the number of times of generation have been developed.

PTL 1 discloses a method for automatically diluting a standard solution of one concentration with a device to generate a calibration curve of multi-point concentration. PTL 2 discloses a device that controls analysis conditions to be the same every time and quantifies a concentration of a component to be measured based on stored calibration curve data.

### Citation List

#### Patent Literature

PTL 1: JP 2001-249137 A
PTL 2: JP 2008-175722 A

## Summary of Invention

### Technical Problem

The number of standard solutions used to generate the calibration curve depends on the inspection item, and is six or more (six or more concentrations) in a case. The number of times of measuring each standard solution at the time of generating the calibration curve varies depending on the device, the reagent, the inspection item, and the like, and there is also a device that generates a calibration curve from pieces of data measured multiple times. In the inspection item in which the number of standard solutions or the number of times of measurement for each standard solution at the time of generating the calibration curve is large, the amount of reagent consumed to generate the calibration curve increases. In a case where there are a plurality of inspection items that require calibration, since a plurality of different standard solutions are prepared for each inspection item, the work becomes complicated. It takes time to generate calibration curves of all items, and a waiting time until the measurement of the sample having the unknown concentration of the component to be measured is started becomes long.

In PTL 1, since the plurality of standard solutions are prepared by diluting one standard solution, substantially only one standard solution is used. In PTL 2, since the same calibration curve is repeatedly used by setting the same analysis condition every time, it is difficult to reduce the number of standard solutions used when one calibration curve is created. Accordingly, in the method of the related art for simplifying the generation of the calibration curve as in PTL 1 and PTL 2, it is considered that it is difficult to suppress time and effort into creating the calibration curve while sufficiently reflecting the pieces of data obtained from the plurality of standard solutions on the calibration curve.

The present invention has been made in view of the above problems, and an object thereof is to suppress time and effort into generating a calibration curve while ensuring accuracy of the calibration curve in an analysis step of generating the calibration curve using two or more standard solutions (two or more concentrations).

### Solution to Problem

A calibration curve generation method according to the present invention includes acquiring time course data by irradiating a mixed reaction liquid obtained by mixing one standard solution containing a component to be measured having a concentration other than a zero concentration and a reagent reacting with the component to be measured with light and measuring a turbidity change over time of the mixed reaction liquid, extracting pieces of light amount data in a plurality of different times from a fitting line obtained by complementing discrete portions of the time course data, and generating the calibration curve indicating a relationship between the plurality of pieces of light amount data and a plurality of concentrations by converting the plurality of different times into the plurality of concentrations of the component to be measured.

That is, in the method of the related art, the time course data of each standard solution is acquired by measuring the standard solution group having the plurality of known concentrations and the calibration curve is generated by using the light amount data extracted from the time course data. However, in the present invention, a calibration curve can be generated by extracting a plurality of pieces of light amount data corresponding to multi-point calibration data from a fitting line of time course data of one standard solution having any concentration other than a zero concentration.

### Advantageous Effects of Invention

In accordance with the calibration curve generation method according to the present invention, since the calibration curve corresponding to the multi-point calibration is derived from the time course data acquired by measuring one standard solution for the inspection item that requires calibration, it is possible to suppress the consumption of the reagent as compared with the method of the related art in which the calibration curve is generated by measuring the plurality of standard solutions having the known concentrations. As compared with the method of the related art, since the number of standard solutions to be prepared can be reduced, the complexity of the preparation is eliminated. Other objects, configurations, and effects will be made apparent in the descriptions of the following embodiments.

### Brief Description of Drawings

[FIG. 1] FIG. 1 is a flowchart illustrating a calibration curve generation procedure in a first embodiment.
[FIG. 2] FIG. 2 is an overall configuration diagram example of an automatic clinical analyzer 100 according to the first embodiment.
[FIG. 3] FIG. 3 illustrates an example of a setting screen used to set calibration information.

[FIG. 4] FIG. 4 illustrates an example of time course data acquired by absorbance measurement.

[FIG. 5] FIG. 5 is an example of time course data by absorbance measurement of a standard solution group having six known concentrations C'1 to C'6.

[FIG. 6] FIG. 6 illustrates an example of a calibration curve in a case where data in Table 1 is plotted and approximated by a polygonal line.

[FIG. 7] FIG. 7 illustrates an example of time course data and a fitting line after data processing of a standard solution 6.

[FIG. 8] FIG. 8 illustrates the fitting line and photometric points corresponding to absorbance change amount data for generating a calibration curve after data processing of the standard solution 6.

[FIG. 9] FIG. 9 illustrates an example of time course data and a fitting line after data processing of a standard solution N.

[FIG. 10] FIG. 10 illustrates a fitting line after data processing of the standard solution N and absorbance change amounts: ΔA1 to ΔAN (output information) corresponding to photometric points: P1 to PN.

[FIG. 11] FIG. 11 illustrates an example of a calibration curve generated in the first embodiment in a case where a calibration curve type is a polygonal line.

[FIG. 12] FIG. 12 illustrates an example in which the calculated photometric point is input to a photometric point field in the calibration setting screen example.

[FIG. 13] FIG. 13 illustrates a fitting line for data obtained by processing time course data representing the reaction of a reagent (lot C) and a standard solution 6 (lot D).

[FIG. 14] FIG. 14 illustrates the fitting line after data processing of the standard solution 6 (lot D) and an absorbance change amount (output information) corresponding to the photometric point illustrated in FIG. 12.

[FIG. 15] FIG. 15 illustrates the generated calibration curve.

[FIG. 16] FIG. 16 illustrates an example in which a calibration curve generated by the method of the first embodiment (FIG. 15) and a calibration curve generated by a method of the related art are superimposed.

[FIG. 17] FIG. 17 illustrates an example in which the calculated photometric point is input to the photometric point field in the calibration setting screen example.

[FIG. 18] FIG. 18 illustrates a fitting line for data obtained by processing time course data representing the reaction of a reagent (lot G) and a standard solution 3 (lot H).

[FIG. 19] FIG. 19 illustrates a fitting line after data processing of a standard solution 3 (lot H) and a scattered light intensity change amount (output information) corresponding to the photometric point illustrated in FIG. 17.

[FIG. 20] FIG. 20 illustrates the generated calibration curve.

[FIG. 21] FIG. 21 illustrates an example in which the calibration curve generated by the method of the first embodiment (FIG. 20) and the calibration curve generated by the method of the related art are superimposed.

[FIG. 22] FIG. 22 illustrates an example of a setting screen of calibration information in a second embodiment.

[FIG. 23] FIG. 23 illustrates a fitting line after data processing of the standard solution N and absorbance change amounts: ΔA2 to ΔAN (output information) corresponding to photometric points: P2 to PN.

[FIG. 24] FIG. 24 illustrates time course data obtained by measuring a time course of a standard solution 1 in which a component to be measured has a zero concentration.

[FIG. 25] FIG. 25 illustrates an example of a calibration curve generated in the second embodiment.

## Description of Embodiments

### <First embodiment>

The inventors of the present application have found that, among latex immunoturbidimetry items that require to be calibrated, time course data obtained by measuring a standard solution having a concentration other than a zero concentration of a component to be measured: CN reflects a reaction of a standard solution having a concentration lower than the concentration of the standard solution. Specifically, the inventors of the present application have found that, in the time course data obtained by measuring the standard solution of the concentration: CN, a measured value or an arithmetic value at X seconds after the start of the reaction corresponds to a measured value or an arithmetic value for a certain time of Y seconds ($Y \geq X$) when a standard solution having a concentration: CM ($CM \leq CN$) is measured. Based on this finding, the inventors of the present application has considered that a calibration curve equivalent to a calibration curve of a method of the related art generated from time course data obtained by measuring a standard solution group having a plurality of concentrations can be generated by using only the time course data obtained by measuring one standard solution having a concentration other than the zero concentration of the component to be measured, extracting a plurality of pieces of data (measured value or arithmetic value) at different reaction times of the time course data, plotting the plurality of pieces of data in association with a plurality of concentrations of the component to be measured, and approximating each of the plots with any mathematical expression.

In a first embodiment of the present invention, a case where a calibration curve is generated from time course data acquired by measuring only a standard solution N having a highest concentration of the component to be measured corresponding to inspection items for which the number of standard solutions is N ($N \geq 2$) points or more will be described.

FIG. 1 is a flowchart illustrating a calibration curve generation procedure in the first embodiment. When a device or a reagent is newly introduced or a reagent lot is changed, a calibration curve is newly generated. Time course data is measured by using a standard solution N having a maximum concentration of the component to be measured among the standard solutions used in the inspection item. Data processing is performed on the obtained time course data according to an arithmetic point of the item, and then a fitting line is derived. Among "data for converting photometric points to concentrations" representing a relationship between a concentration of the component to be measured and reaction times (photometric points) of standard solutions 1 to N separately set independently of the measurement of the standard solution N, first, points corresponding to calibration data of the standard solutions 1 to N are specified from the fitting line by applying photometric point information to a fitting line. At this point in time, a plurality of pieces of light amount data (absorbance, scattered light intensity, or change amount thereof) corresponding to a plurality of photometric points is obtained. Subsequently, a calibration curve indicating a relationship between the light amount data and the concentration of the component to be measured is generated by converting a plurality of pieces of photometric point information into concentration information of the component to be measured according to the "data for converting photometric points to concentrations". The "data for converting photometric points to concentrations" is obtained by associating photometric point information necessary for extracting light amount data corresponding to calibration data of a standard solution group of the standard solutions 1 to N from the time course data of the standard solution N with information corresponding to the concentration of the component to be measured of the standard solution group. Here, in a case where the standard solutions 1 to N are treated as a set, the standard solutions 1 to N are expressed as a standard solution group, and the "measurement of the standard solution group" means the "measurement of the standard solutions 1 to N". Details of the above procedure will be described later.

So far, as calibration using measurement data of one standard solution having any known concentration other than the zero concentration, there is span calibration. The span calibration is a calibration method for updating only a K value (K factor) corresponding to a slope among calibration factors in the existing calibration curve by using data of one standard solution having the known concentration other than zero concentration. However, there is a problem that the span calibration cannot be applied to update calibration curve information of a non-linear system (for example, a spline function) generated in multi-point calibration in which there are a plurality of calibration factors. In the first embodiment, calibration curve generation data corresponding to the multi-point calibration is extracted from time course data of one standard solution having the known concentration other than the zero concentration, and a relational expression between the data and the concentration is obtained to generate a calibration curve. Accordingly, it is possible to cope with a calibration curve of a function such as a spline which is a problem of the span calibration.

The time course data of the first embodiment is measured by using, for example, an automatic clinical analyzer. The "data for converting photometric points to concentrations" indicating the relationship between the concentration of the component to be measured and the reaction times (photometric points) may be provided by, for example, a manufacturer providing the reagent or the standard solution, or may be calculated in the automatic clinical analyzer by using these pieces of data in a case where the calibration curve data generated by the method of the related art and time course data of a highest-concentration standard solution used for generating the calibration curve are present in the analyzer. Alternatively, information stored in an external storage medium may be read and used. In a case where the data for converting photometric points to concentrations is provided by the manufacturer, it is assumed that the data for converting photometric points to concentrations is provided for each combination of a reagent lot and a standard solution lot, for each reagent lot alone, or for each standard solution lot alone.

<First embodiment: configuration of automatic clinical analyzer>

FIG. 2 is an overall configuration diagram example of an automatic clinical analyzer 100 according to the first embodiment. A basic device operation will be described with reference to FIG. 2, but is not limited to the following example.

Approximately, the automatic clinical analyzer 100 is configured by three types of disks including a sample disk 103, a reagent disk 106, and a reaction disk 109, dispensing mechanisms 110 and 111 that move a sample and a reagent between these disks, a drive unit 117 that drives three types of disks and the dispensing mechanisms, a control circuit 118 that controls the drive unit, an absorbance measurement circuit 119 that measures absorbance of a reaction liquid, a scattered light measurement circuit 120 that measures scattered light from the reaction liquid, a data processing unit 121 that processes data measured by each measurement circuit, an operation unit 122 that is an interface with the data processing unit 121, a printer 123 that prints and outputs information, and a communication interface 124 connected to a network or the like.

A plurality of sample cups 102 which are storage containers for samples 101 are disposed on a circumference of the sample disk 103. The samples 101 are blood, urine, spinal fluid, standard solution, and the like. A plurality of reagent bottles 105 which are storage containers for reagents 104 are disposed on a circumference of the reagent disk 106. A plurality of cells 108 which are storage containers of reaction liquids 107 obtained by mixing the samples 101 and the reagents 104 are disposed on a circumference of the reaction disk 109. Each disk is rotated by a motor included in the drive unit 117, and the motor is controlled by the control circuit 118.

The sample dispensing mechanism 110 is a mechanism used when the sample 101 is moved by a certain amount to the cell 108 from the sample cup 102 disposed on the sample disk 103 rotating clockwise and counterclockwise. The sample dispensing mechanism 110 includes, for example, a nozzle that discharges or sucks the sample 101, a robot that moves the nozzle to a predetermined position, and a pump that discharges or sucks the sample 101 from or to the nozzle. The robot and the pump correspond to the drive unit 117.

The reagent dispensing mechanism 111 is a mechanism used when the reagent 104 is moved by a certain amount to the cell 108 from the reagent bottle 105 disposed on the reagent disk 106 rotating clockwise and counterclockwise. The reagent dispensing mechanism 111 includes, for example, a nozzle that discharges or sucks the reagent 104, a robot that moves the nozzle to a predetermined position, and a pump that discharges or sucks the reagent 104 from or to the nozzle. The robot and the pump correspond to the drive unit 117.

The cell 108 is immersed in a thermostatic fluid 112 in a thermostatic bath whose temperature and flow rate are controlled in the reaction disk 109. Thus, temperatures of the cell 108 and the reaction liquid 107 therein are maintained at a constant temperature even during the movement accompanying the rotation of the reaction disk 109. In the present embodiment, water is used as the thermostatic fluid 112, and a temperature thereof is adjusted to 37 ± 0.1°C by the control circuit 118. Of course, a medium and a temperature used as the thermostatic fluid 112 are examples.

A stirring mechanism 113 is a mechanism for stirring and mixing the sample 101 and the reagent 104 in the cell 108. The stirring mechanism 113 includes, for example, a stirring rod that stirs the sample 101 and the reagent 104, a robot that moves the stirring rod to a predetermined position, and a motor that rotates the stirring rod. The robot and the motor correspond to the drive unit 117.

A cleaning mechanism 114 is a mechanism that sucks the reaction liquid 107 from the cell 108 for which analysis processing is completed and cleans the empty cell 108. The cleaning mechanism 114 includes, for example, a nozzle that sucks the reaction liquid 107 after the analysis completion, a nozzle that discharges cleaning water to the cell 108 after the reaction liquid 107 is sucked, a nozzle that sucks cleaning water, and a mechanism that moves the nozzles. This mechanism is included in the drive unit 117. A next sample 101 is dispensed from the sample dispensing mechanism 110 to the cell 108 again after the cleaning completion, and a new reagent 104 is dispensed from the reagent dispensing mechanism 111. These sample and reagent are used for new analysis processing.

An absorbance measurement unit 115 and a scattered light measurement unit 116 are disposed on a part of the circumference of the reaction disk 109. Both the absorbance measurement unit 115 and the scattered light measurement unit 116 are not necessarily required, and any one or both thereof may be equipped.

The absorbance measurement unit 115 includes a light source and a transmitted light receiver. For example, the light source is a halogen lamp, and the cell 108 is irradiated with light emitted from the light source, and the light transmitted through the reaction liquid 107 stored in the cell 108 is dispersed by a diffraction grating and is received by a photodiode array. Wavelengths received by the photodiode array are 340 nm, 405 nm, 450 nm, 480 nm, 505 nm, 546 nm, 570 nm, 600 nm, 660 nm, 700 nm, 750 nm, and 800 nm. Light reception signals from these light receivers are transmitted to a storage unit 121a of the data processing unit 121 through the absorbance measurement circuit 119. Here, the absorbance measurement circuit 119 acquires light reception signals of wavelength regions for each certain time, and outputs the acquired light amount value to the data processing unit 121.

The scattered light measurement unit 116 includes a light source, a transmitted light receiver, and a scattered light receiver. For example, the light source is an LED, the cell 108 is irradiated with light emitted from the light source, the light transmitted through the reaction liquid 107 stored in the cell 108 is received by the transmitted light receiver, and the light scattered by the reaction liquid 107 is received by the scattered light receiver. For example, 700 nm is used as a wavelength of the irradiation light. In the scattered light measurement, it is preferable that irradiation light having a wavelength of 600 nm to 800 nm is used in consideration of making the sample less likely to be influenced by impurities (chyle, hemolysis, and jaundice) contained in the sample and of being visible light. As the light source, a laser light source, a xenon lamp, a halogen lamp, or the like may be used in addition to the LED. For example, a photodiode is used as the light receiver. The transmitted light and the light reception signal by the scattered light receiver are transmitted to the storage unit 121a of the data processing unit 121 through the scattered light measurement circuit 120. The scattered light measurement circuit 120 also acquires light reception signals for each certain time, and outputs the acquired light amount value to the data processing unit 121. The scattered light receiver is disposed, for example, in a plane substantially perpendicular to a movement direction of the cell 108 by rotation of the reaction disk 109. At this time, a plurality of single linear arrays may be disposed inside, and scattered light rays of a plurality of angles may be received at a time. Options of light reception angles can be expanded by using the linear arrays. Instead of the light receiver, an optical system such as a fiber or a lens may be disposed to guide light to a scattered light receiver disposed at another position.

The data processing unit 121 includes the storage unit 121a and an analysis unit 121b. The storage unit 121a stores a control program, a measurement program, a data analysis program, calibration curve data, measurement data, an analysis result, and the like. The measurement program is, for example, a measurement program of calibration curve generation data or a sample measurement program. When an analysis request is input to the data processing unit 121 via the operation unit 122 or the communication interface 124, the corresponding measurement program is executed and the control program runs. Each mechanism is caused to perform analysis by the control program causing the control circuit to operate and the control circuit causing the drive unit to operate. The measurement data output to the data processing unit 121 via the absorbance measurement circuit 119 and the scattered light measurement circuit 120 is stored in the storage unit 121a and is read out to the analysis unit 121b together with the data analysis program. The data analysis program is, for example, a calibration curve generation program, a program for quantifying a sample concentration of a component to be measured having an unknown concentration by using a calibration curve, and a program for determining an error with respect to a calibration curve or a sample measurement result. An analysis result analyzed according to the data analysis program, an analysis condition, data generated at the time of analysis, and the like are returned to and retained in the storage unit 121a. An analysis result stored in the storage unit 121a and error information are displayed on a display unit 122a of the operation unit 122, and are printed out by the printer 123 as necessary. The data processing unit 121 is realized by, for example, a processor such as a CPU.

The operation unit 122 includes the display unit 122a, a keyboard 122b as an input unit, and a mouse 122c. The input may be performed by touching a screen of the display unit 122a in addition to the keyboard 122b, or may be performed by selecting an item displayed on the screen of the display unit 122a with the mouse 122c.

The communication interface 124 is connected to, for example, a network in a hospital, and communicates with a hospital information system (HIS) or a laboratory information system (LIS).

<First embodiment: acquisition of time course data for calibration curve generation>

The acquisition of the time course data used for generating the calibration curve in the first embodiment will be described.

FIG. 3 illustrates an example of a setting screen used to set calibration information. First, calibration information and analysis parameters are set for an inspection item that requires to be calibrated. The setting screen includes fields for inputting a standard solution lot, a concentration of the standard solution N to be used, a position number when the sample cup 102 storing the standard solution N is installed on the sample disk 103, the number of calibration curve data points, a concentration at the time of generating the calibration curve for the number of data points, photometric point information, and the like. In FIG. 3, the lot of the standard solution: AAA, the concentration of the standard solution: Y, the installation position of the standard solution: 10, the number of calibration curve data points: N, the concentrations: C1 to CN, and the pieces of photometric point information: P1 to PN. The significance of the concentration and the photometric point will be described later. Examples of the analysis parameter include a dispensing amount of a sample or a reagent, and an arithmetic point used for data processing. Information other than the installation position of the standard solution is given from, for example, the manufacturer that provides the reagent and the standard solution. It is desirable that an operator can optionally set the installation position of the standard solution.

The calibration information and the analysis parameter may be input from the operation unit 122, may be read into the storage unit 121a via a storage medium such as a CD-ROM, or may be read via the communication interface 124. Alternatively, if the information is stored in the storage unit 121a in the past, the information may be called. The concentration and the photometric point which are a part of the calibration information correspond to the data for converting photometric points to concentrations. In a case where the calibration curve data generated by the method of the related art and the time course data of the standard solution having the highest concentration used for generating the calibration curve are present in the storage unit 121a, the concentration and the photometric point calculated by the analysis unit 121b may be reflected by using these pieces of data and the concentration information of the standard solution N. An example of the calculation method is as described in <First embodiment: setting of data for converting photometric points to concentrations> to be described later. FIG. 3 illustrates an example of the setting screen on which a specific concentration and photometric point information are seen, but the setting screen may be a setting screen on which these concentration and photometric point information are not displayed. The configured information is stored in the storage unit 121a, is read out by the analysis unit 121b, and is used for generating the calibration curve.

Subsequently, the reagent bottle of the item is installed on the reagent disk 106, and the standard solution N is installed on the sample disk 103. Thereafter, a calibration request is input via the operation unit 122 or the communication interface 124. The input content is transmitted to the data processing unit 121, the measurement program of the calibration curve generation data stored in the storage unit 121a is executed, and the control program runs. Each mechanism is caused to perform analysis by the control program causing the control circuit to operate and the control circuit causing the drive unit to operate. A specific analysis operation is as described below, for example. Here, although an item in which a first reagent and a second reagent are present will be described as an example, the present invention is not limited to the item in which the first reagent and the second reagent are present.

First, the cleaning mechanism 114 operates to clean the cell 108. Subsequently, the sample dispensing mechanism 110 operates to dispense the sample 101 (corresponding to the standard solution N) in the sample cup 102 into the cell 108 by a certain amount. The reagent dispensing mechanism 111 operates to dispense the first reagent as the reagent 104 in the reagent bottle 105 into the cell 108 storing the sample 101 by a certain amount, and thus, the reaction liquid 107 which is a mixed liquid of the sample 101 and the reagent 104 is obtained. When the sample 101 and the reagent 104 are dispensed, the control circuit 118 causes the drive unit 117 to rotationally drive the sample disk 103, the reagent disk 106, and the reaction disk 109. At this time, the sample cup 102, the reagent bottle 105, and the cell 108 disposed on the disks are rotated and positioned at a predetermined dispensing position in accordance with a drive timing of the sample dispensing mechanism 110 and the reagent dispensing mechanism 111.

Subsequently, the stirring mechanism 113 operates to stir the reaction liquid 107 in the cell 108. By the rotation of the reaction disk 109, the cell 108 storing the reaction liquid 107 passes through the absorbance measurement unit 115 and the scattered light measurement unit 116. Whenever the light passes through each measurement unit, a signal of the transmitted light or the scattered light from the reaction liquid 107 is transmitted to the storage unit 121a of the data processing unit 121 via the absorbance measurement circuit 119 and the scattered light measurement circuit 120. This signal is accumulated as the time course data.

When about 5 minutes elapse from the dispensing of the first sample 101, the second reagent as the reagent 104 is additionally dispensed into the cell 108 storing the reaction liquid 107 by the reagent dispensing mechanism 111, is stirred by the stirring mechanism 113, and passes through the absorbance measurement unit 115 and the scattered light measurement unit 116 along with the rotation of the reaction disk 109 for certain time (about 5 minutes). A signal of the transmitted light or the scattered light from the reaction liquid 107 obtained whenever the light passes through each measurement unit is transmitted to the storage unit 121a of the data processing unit 121 via the absorbance measurement circuit 119 and the scattered light measurement circuit 120, and becomes time course data for about 10 minutes in total.

FIG. 4 illustrates an example of time course data acquired by absorbance measurement. A photometric point illustrated on a horizontal axis represents a measurement order of the time course data. A vertical axis represents absorbance data measured by the absorbance measurement circuit 119. In this example, the absorbance data is acquired at intervals of about 18 seconds, is absorbance data up to photometric points 1 to 16 obtained from a reaction liquid of the sample and the first reagent, and is absorbance data up to photometric points 17 to 34 obtained from a reaction liquid of the sample, the first reagent, and the second reagent. In a case where the time course data is scattered light intensity data measured by the scattered light measurement circuit 120, the vertical axis in FIG. 4 is scattered light intensity. The acquired time course data of the standard solution N is stored in the storage unit 121a, is read out to the analysis unit 121b, and is used for generating the calibration curve. In a case where the time course data is acquired multiple times, when generating the calibration curve, data obtained by averaging the pieces of data may be used as the calibration curve generation data, or any one among the acquired time course data may be selected and used.

<First embodiment: setting of data for converting photometric points to concentrations>

Next, the setting of the "data for converting photometric points to concentrations" representing a relationship between the reaction time and the concentration of the component to be measured will be described. The reaction time can be replaced with the photometric point. Here, it is assumed that the horizontal axis of the time course data is output as the photometric point, the reaction time is expressed as the photometric point. Here, although an example in which the data for converting photometric points to concentrations is derived using the calibration curve data generated by the method in the related art and the time course data of the standard solution having the highest concentration used to generate the calibration curve will be described, the derivation is not limited to the following derivation example.

It is necessary to know a data processing method when the calibration curve is generated in the method of the related art and to apply a processing method. Therefore, first, the generation of the calibration curve in the method of the related art will be described. First, pieces of time course data of a standard solution group having a plurality of known concentrations C'1 to C'N ($N \geq 2$) are acquired. For specific description, N = 6.

FIG. 5 is an example of time course data by absorbance measurement of a standard solution group having six known concentrations C'1 to C'6. Here, it is assumed that arithmetic points set by the analysis parameter are, for example, (18 and 30) (18 of the arithmetic point corresponds to an arithmetic start point, and 30 corresponds to an arithmetic completion point), absorbance change amounts ΔA'1 to ΔA'6 for a certain time between these points are calculated. The arithmetic point is designated for each inspection item. The calculated absorbance change amounts (ΔA'1 to ΔA'6) are plotted with respect to the concentrations of the components to be measured (C'1 to C'6) of the standard solution group, and a relational expression of these pieces of data is used as the calibration curve. Table 1 shows the calibration curve generation data acquired by the method of the related art.

[Table 1]

Table 1 Calibration curve generation data acquired by method of related art

| Standard solution | 1 | 2 | 3 | 4 | 5 | 6 |
|---|---|---|---|---|---|---|
| Concentration | C'1 | C'2 | C'3 | C'4 | C'5 | C'6 |
| Absorbance change amount | ΔA'1 | ΔA'2 | ΔA'3 | ΔA'4 | ΔA'5 | ΔA'6 |

FIG. 6 illustrates an example of a calibration curve in a case where the data of Table 1 is plotted and approximated by a polygonal line. This calibration curve corresponds to a calibration curve generated by the method of the related art.

Subsequently, time course data of a standard solution 6 having a highest concentration C'6 is processed. First, a measured value is processed by using an arithmetic point used to extract the calibration curve generation data. For example, zero point adjustment or the like is performed. In this example, since a change amount with absorbance: A'18 of the photometric point 18 as a reference is used as calibration curve generation data, A'18 is subtracted from all measured values also in the time course data of the standard solution C'6. The time course data after the data processing is fitted, and a fitting expression is derived to complement discrete measurement data. A fitting function is, for example, a polynomial function or an exponential function.

FIG. 7 illustrates an example of time course data and a fitting line after data processing of the standard solution 6.

FIG. 8 illustrates a fitting line after the data processing of the standard solution 6 and photometric points (P1 to P6) corresponding to pieces of absorbance change amount data (ΔA'1 to ΔA'6) for generating the calibration curve acquired by the method of the related art. The photometric points (P1 to P6) corresponding to the absorbance change amounts (ΔA'1 to ΔA'6) of the standard solutions are calculated by substituting the pieces of absorbance change amount data (ΔA'1 to ΔA'6) acquired by the method of the related art in Table 1 into the fitting expression. Table 2 shows a relationship between the pieces of change amount data (ΔA'1 to ΔA'6) for generating the calibration curve acquired by the method of the related art and the photometric points (P1 to P6) required when these pieces of data are extracted only from the time course data of the standard solution 6.

[Table 2]

Table 2 Relationship between change amount data for generating calibration curve acquired by method of related art and photometric points required when data is extracted only from time course data of standard solution 6

| Absorbance change amount | ΔA'1 | ΔA'2 | ΔA'3 | ΔA'4 | ΔA'5 | ΔA'6 |
|---|---|---|---|---|---|---|
| Photometric point | P1 | P2 | P3 | P4 | P5 | P6 |

In Tables 1 and 2, since the pieces of absorbance change amount data (ΔA'1 to ΔA'6) are the same, the relationship between the concentration of the component to be measured and the photometric point is derived as shown in Table 3.

[Table 3]

Table 3 Relationship between concentration of component to be measured and photometric point

| Concentration | C'1 | C'2 | C'3 | C'4 | C'5 | C'6 |
|---|---|---|---|---|---|---|
| Photometric point | P1 | P2 | P3 | P4 | P5 | P6 |

The setting of the "data for converting photometric points to concentrations" is not completed by deriving the information in Table 3, and it is necessary to review the concentrations (C'1 to C'6) of the component to be measured in Table 3 in accordance with the concentration (C6) of the standard solution 6 to be used again when the calibration curve is generated. It is necessary to generate the calibration curve again particularly whenever the reagent lot is changed. Although the standard solution 6 is used again when the calibration curve is generated, the concentration (C6) of the component to be measured in the standard solution 6 corresponds to the concentration (C'6) of the component to be measured in the standard solution 6 in the standard solution group used in the derivation of Table 3, but the concentrations may actually be different (for example, in a case where the standard solution lots are different). In such a case, the final setting of the "data for converting photometric points to concentrations" is completed by correcting the concentrations (C'1 to C'6) of the standard solution group (standard solutions 1 to 6) shown in Table 3 by using the concentration (C6) of the standard solution 6 to be used again when the calibration curve is generated. Here, an example in which the concentration is corrected by using, for example, the following Expression (1) will be described.

$$CM = CN \times (C'M \div C'N) \cdots \text{Expression (1)}$$

CM is a concentration of a component to be measured having an M-th number of data points ($1 \leq M \leq N$) of the calibration curve generated in the present invention, CN is a concentration of the standard solution N ($N \geq 2$), C'M is a concentration of a standard solution M in the standard solution group used for deriving the relationship table (Table 3) between the concentration of the component to be measured and the photometric point, and C'N is a concentration of the standard solution N in the standard solution group used for deriving the relationship table (Table 3) between the concentration of the component to be measured and the photometric point.
Information on the concentration of the component to be measured: CM and the reaction time (photometric point): PM is derived as in the above description example. Hereinafter, the derived information is referred to as "data for converting photometric points to concentrations". For easy understanding, the "data for converting photometric points to concentrations" is organized and illustrated in Table 4 while N = 6 is maintained.

[Table 4]

Table 4 Data for converting photometric points to concentrations

| Concentration | C1 | C2 | C3 | C4 | C5 | C6 |
|---|---|---|---|---|---|---|
| Photometric point | P1 | P2 | P3 | P4 | P5 | P6 |

The "data for converting photometric points to concentrations" in Table 4 corresponds to the concentration and the photometric point information in FIG. 3. The photometric point information may be derived from a combination of a set of standard solution lot and reagent lot, or may be obtained by averaging pieces of photometric point data derived from combinations of various lots. The "data for converting photometric points to concentrations" may be provided by the manufacturer providing the reagent and the standard solution for each combination of the reagent lot and the standard solution lot, for each reagent lot alone, or for each standard solution lot alone. As described above, in a case where information necessary for deriving this information is stored in the storage unit 121a, the necessary information and a calculation program may be read out to the analysis unit 121b, may be calculated by the analysis unit 121b, may be returned to the storage unit 121a, and may be called as necessary. Alternatively, information stored in an external storage medium may be read and used.
In the description example mentioned herein, although the change amount in the time course data for a certain time is used as the calibration curve data generated by the method of the related art, the calibration curve data may not be the change amount, but may be the absorbance or the scattered light intensity of a certain photometric point, or may be an average value of pieces of data of points before and after a designated photometric point (these values correspond to a case where one arithmetic point is set). In this case, processing of the time course data of the standard solution 6 is not essential, and the data as it is may be used, or an average value of pieces of data before and after the arithmetic point may be used. In the generation of the calibration curve data in the method of the related art, as in the present description example, even in a case where the change amount of the time course data is calculated for a certain time, not only simple subtraction processing between the arithmetic points but also the pieces of data of points before and after the arithmetic point may be used in combination to perform subtraction processing of the average value thereof. In this case, similar arithmetic processing may be performed in the processing of the time course data of the standard solution 6 acquired for generating the calibration curve. The review of the concentration is not limited to the conversion expression of Expression (1), and a polynomial function, an exponential function, or the like may be used. A processing method of the data is determined for each inspection item.
The inventors of the present application have found that the time course data of the standard solution 6 having the highest concentration of the component to be measured among the standard solutions 1 to 6 includes the time course data of the other standard solutions 1 to 5. That is, it has been found that the light amount data at the photometric points P1 to P6 shown in Table 4 among the fitting line obtained by complementing discrete portions of the time course data of the standard solution 6 is equivalent to the light amount data for generating the calibration curve (absorbance change amounts ΔA'1 to ΔA'6 in the above description) calculated by the method of the related art from each time course data of the standard solution group (standard solutions 1 to 6).

Thus, in the first embodiment, photometric point information for extracting data corresponding to the multi-point calibration data of the method of the related art from the fitting line of the time course data of the standard solution 6 is derived by temporarily applying the light amount data acquired by the method of the related art from the standard solution group (standard solutions 1 to 6) to the fitting line of the time course data of the standard solution 6 (FIG. 8). These pieces of photometric point information are associated with pieces of information corresponding to the concentrations of the components to be measured contained in the standard solution group (standard solutions 1 to 6) (Table 4). Here, the relationship between the photometric point information and the concentration of the component to be measured which are associated with each other is referred to as the "data for converting photometric points to concentrations". In the present invention, a calibration curve equivalent to the calibration curve generated by using the standard solution group (all of the standard solutions 1 to 6) is realized by using only the "data for converting photometric points to concentrations" and the time course data of the standard solution 6 acquired in the changed reagent lot.

Here, a method for generating the calibration curve in the present invention will be briefly described, and a more detailed procedure and a specific example will be described on and after <First embodiment: generation of calibration curve>.

In the present invention, first, a plurality of pieces of light amount data (absorbance, scattered light intensity, or change amount thereof) are extracted by applying the photometric point information in the "data for converting photometric points to concentrations" to the fitting line of the time course data of only the standard solution 6 acquired in the changed reagent lot. At this point in time, the plurality of pieces of light amount data corresponding to the plurality of photometric points are obtained. Subsequently, the extracted light amount data is associated with the concentration of the component to be measured by converting the photometric point information into the concentration information of the component to be measured according to the "data for converting photometric points to concentrations". The calibration curve is generated by obtaining the relational expression between the concentration of the component to be measured and the extracted light amount data associated with each other. As described above, even in a case where new calibration is required, it is not necessary to acquire the time course data of the standard solution group (set of standard solutions having the plurality of concentrations) as in the method of the related art, and a calibration curve equivalent to the calibration curve in a case where the standard solution group (all of the standard solutions 1 to 6) is used is realized by using only the "data for converting photometric points to concentrations" and the time course data of the standard solution 6 acquired in the changed reagent lot. The detailed procedure and the specific example will be described later.

<First embodiment: generation of calibration curve>

A procedure for generating the calibration curve by using the configured "data for converting photometric points to concentrations" will be described. The calibration information (FIG. 3), the arithmetic points of the analysis parameters and the calibration curve type, the time course data (data acquired in <First embodiment: acquisition of time course data for calibration curve generation>, and here, referred to as absorbance data) of the standard solution N (standard solution 6 in the above example), and the calibration curve generation program stored in the storage unit 121a are called to the analysis unit 121b. The "data for converting photometric points to concentrations" corresponds to the concentration and the photometric point information in the calibration information (FIG. 3). The execution contents of the calibration curve generation program are as follows.

First, the time course data of the standard solution N is processed according to the information on the arithmetic point. The arithmetic point is determined by the inspection item. It is desirable that the processing method is the same as the method for processing the time course data of the standard solution having the known concentration C'N in the setting of the data for converting photometric points to concentrations. For example, here, the processing method used in <First embodiment: setting of data for converting photometric points to concentrations> is taken as an example, the arithmetic points are two points of (18 and 30), and A18 is subtracted from all the measured values with the absorbance of the photometric point 18: A18 as a reference. The time course data after the data processing is fitted, and a fitting expression is derived to complement discrete measurement data.

FIG. 9 illustrates an example of the time course data and the fitting line after the data processing of the standard solution N. A fitting function is, for example, a polynomial function or an exponential function. It is desirable that the same type of function as the fitting function used in the setting of the data for converting photometric points to concentrations is used. The pieces of data (ΔA1 to ΔAN) of the absorbance change amounts are calculated (output) by substituting the pieces of photometric point information (P1 to PN) set in the calibration information (FIG. 3) into the obtained fitting expression.

FIG. 10 illustrates the fitting line after data processing of the standard solution N and the absorbance change amounts: ΔA1 to ΔAN (output information) corresponding to photometric points: P1 to PN. Here, the output absorbance change amounts: ΔA1 to ΔAN are equivalent to the pieces of light amount data obtained from the time course data when the standard solution group (standard solutions 1 to N) is measured in the calibration curve generation by the method of the related art. Subsequently, the photometric points P1 to PN are converted into the concentration information (concentration information: C1 to CN in FIG. 3) of the component to be measured according to the data for converting photometric points to concentrations, and thus, the concentrations (C1 to CN) and the pieces of absorbance change amount data (ΔA1 to ΔAN) are associated with each other. The pieces of data (ΔA1 to ΔAN) of the absorbance change amounts are plotted with respect to the concentrations (C1 to CN), and the calibration curve is generated by approximating the pieces of data with a mathematical expression of a calibration curve type (linear, polygonal line, spline, and the like) designated by the analysis parameter information and calculating a calibration factor.

FIG. 11 illustrates an example of the calibration curve generated in the first embodiment in a case where the calibration curve type is a polygonal line. A horizontal axis represents a concentration of the component to be measured, and a vertical axis represents the absorbance change amount data: ΔA. The calibration factor is coefficient information of an approximate expression such as absorbance at a calibration point (calibration curve point), scattered light intensity, or change amount data thereof, or a slope of the calibration curve. The calibration factor and the calculation method thereof vary depending on the type of the calibration curve (linear, polygonal line, spline, and the like). The generated calibration curve, the time course data after the processing, and the like are stored in the storage unit 121a. When a sample having an unknown concentration of the component to be measured is measured, the information on the calibration curve is called by the analysis unit 121b and is used for quantification of the concentration of the component to be measured.

Here, although the case where there are two arithmetic points in the processing of the time course data of the standard solution N has been described, there may be one arithmetic point. In the case of one point, data of the point may be used as it is, or an average value of pieces of data before and after the point may be used. Even in a case where there are two arithmetic points, the processing content of the subtraction with measurement data of a calculation start point (corresponding to the point 18 in the above description) as a reference may not be used as described above, and for example, subtraction processing may be performed with an average value of pieces of data of a plurality of points before and after the calculation start point. At this time, also in data of a subtraction target point, the average value of the pieces of data of the plurality of points before and after the point may be used.

<First embodiment: first example of generation of calibration curve and calculation of calibration factor>

Hereinafter, an example in which the calibration curve is generated according to the content described in the first embodiment by using the commercially available reagent and the commercially available standard solution will be introduced with reference to specific inspection items. A generation example of a calibration curve is introduced selecting a fibrinogen/fibrin degradation product (FDP) item as an absorbance measurement item and a high-sensitivity C-reactive protein (CRP) item as a scattered light measurement item. Although all items are latex immunoturbidimetry items, the present invention is not limited to the latex immunoturbidimetry item.

First, the case of the FDP item will be introduced. First, the data for converting photometric points to concentrations is set. Here, since the derivation example described above is followed, data obtained by generating the calibration curve by the method of the related art is required. This data is acquired by using the following reagents and standard solutions.

·Reagent: lot A
·Standard solution group: lot B, concentrations of 6 points.
·Concentration of standard solution group (lot B): standard solution 1 0.0 μg/mL, standard solution 2 7.6 μg/mL, standard solution 3 15.0 μg/mL, standard solution 4 29.0 μg/mL, standard solution 5 61.0 μg/mL, standard solution 6 121.0 μg/mL.

First, the reagent (lot A) and the standard solution group (lot B) are reacted to acquire the time course data of the standard solution group (standard solutions 1 to 6), and two arithmetic points (19 and 34) are used to calculate the absorbance change amount between these points. Here, the average of the absorbances at the points 18 and 19 is subtracted from the average of the absorbances at the points 33 and 34 by using the data of the point immediately before each point, thereby calculating the absorbance change amount. Subsequently, the time course data of the standard solution 6 in the standard solution group (lot B) is processed by Expression (2). X is 18 to 34 points.

Data at an X-th point = (average of absorbances at points X and (X - 1)) - (average of absorbances at points 18 and 19) ··· Expression (2)

The time course data after the processing is fitted with an exponential function. At this time, fitting is divided before 24 points and after 24 points with the photometric point 24 as a boundary. The photometric point is calculated by substituting the absorbance change amount of the standard solution group calculated above into the obtained fitting expression. Here, although the fitting is performed by dividing the data before 24 points and after 24 points, it is not necessarily required to perform the fitting by dividing the data, and it is desirable that the fitting is performed under a condition that the fitting line most matches the time course data after the processing.

FIG. 12 illustrates an example in which the calculated photometric point is input to a photometric point field in a calibration setting screen example.

Next, the concentration information is set. The reagent and the standard solution used for acquiring the time course data used for generating the calibration curve are as follows. The lots of the reagent and the standard solution used at this time are different from the lot used in the setting of the data for converting photometric points to concentrations.

·Reagent: lot C
·Standard solution: lot D, only concentration of standard solution 6 is used among 6 points
·Concentration of standard solution (lot D): standard solution 6_121.0 μg/mL (for reference, concentrations other than standard solution 6 are described. standard solution 1 0.0 μg/mL, standard solution 2 7.3 μg/mL, standard solution 3 15.2 μg/mL, standard solution 4 29.0 μg/mL, standard solution 5 61.0 μg/mL)

Here, the concentration is calculated by using Expression (1). The calculated concentration of the component to be measured is as illustrated in a concentration field in the calibration setting screen example illustrated in FIG. 12. Here, since the concentration (121.0 μg/mL) of the component to be measured in the standard solution 6 in the standard solution group (lot B) and the concentration (121.0 μg/mL) of the component to be measured in the standard solution 6 (lot D) are the same, a result obtained by converting the concentration by using Expression (1) is the same as the concentration of the component to be measured in the standard solution group. Here, in a case where the concentrations of the component to be measured in the standard solutions 6 of lot B and lot D are different from each other, it is necessary to convert the concentration of the component to be measured used for generating the calibration curve into values corresponding to the standard solutions 1 to 6 of the standard solution group (lot B) according to Expression (1). This conversion is similarly applied to Example 2 to be described later.

Finally, the calibration curve is generated. The time course data acquired by reacting the reagent (lot C) with the standard solution 6 (lot D) is processed by using Expression (2) and is fitted with an exponential function to obtain a fitting expression. At this time, fitting is divided before 24 points and after 24 points with the photometric point 24 as a boundary. Since it is desirable that fitting conditions adopted when the data for converting photometric points to concentrations is set are applied, fitting is performed under the same conditions.

FIG. 13 illustrates a fitting line for data obtained by processing the time course data representing the reaction between the reagent (lot C) and the standard solution 6 (lot D).

FIG. 14 illustrates the fitting line after data processing of the standard solution 6 (lot D) and the absorbance change amounts (output information) corresponding to the photometric points illustrated in FIG. 12. The photometric points in FIG. 12 are substituted into the fitting expression, and the absorbance change amounts corresponding to the calibration curve points are calculated.

Table 5 illustrates, in addition to the calibration curve points and the concentrations, the photometric points and the absorbance change amounts (output information) in FIG. 14.

[Table 5]

Table 5 Relationship between calibration curve point, concentration, photometric point, and absorbance change amount

| Calibration curve point | 1 | 2 | 3 | 4 | 5 | 6 |
|---|---|---|---|---|---|---|
| Concentration (μg/mL) | 0.0 | 7.6 | 15.0 | 29.0 | 61.0 | 121.0 |
| Photometric point | 19.1 | 19.6 | 20.1 | 21.2 | 23.8 | 34.0 |

(continued)

| | | | | | | |
|---|---|---|---|---|---|---|
| Absorbance change amount | 18 | 153 | 292 | 563 | 1050 | 2035 |

FIG. 15 illustrates the generated calibration curve. The absorbance change amounts are plotted with respect to the concentrations, and the calibration curve is generated by approximation with a polygonal line. In this example, the calibration curve type is a polygonal line, and examples of the calibration factor include the absorbance change amount at each calibration curve point and the slope of each concentration section. The absorbance change amount at each calibration curve point is as the absorbance change amount shown in Table 5. The slope of each concentration section is, for example, as follows. The slope is (153 - 18)/(7.6 - 0.0) ≈ 17.8 when the FDP concentration is 0.0 μg/mL or more and less than 7.6 μg/mL, the slope is (292 - 153)/(15.0 - 7.6) ≈ 18.8 when the FDP concentration is 7.6 μg/mL or more and less than 15.0 μg/mL, the slope is (563 - 292)/(29.0 - 15.0) ≈ 19.4 when the FDP concentration is 15.0 μg/mL or more and less than 29.0 μg/mL, the slope is (1050 - 563)/(61.0 - 29.0) ≈ 15.2 when the FDP concentration is 29.0 μg/mL or more and less than 61.0 μg/mL, and the slope is (2035 - 1050)/(121.0 - 61.0) ≈ 16.4 when the FDP concentration is 61.0 μg/mL or more.

FIG. 16 illustrates an example in which the calibration curve generated by the method of the first embodiment (FIG. 15) and the calibration curve generated by the method of the related art are superimposed. The calibration curve generated by the method of the related art is obtained by plotting the absorbance change amounts obtained by subtracting the average of the absorbances at the points 18 and 19 from the average of the absorbances at the points 33 and 34 by using the time course data obtained by treating the standard solutions 1 to 6 (lot D) as the standard solution group and reacting the standard solution with the reagent (lot C) with respect to the concentrations of the standard solutions 1 to 6 (lot D) (standard solution 1 0.0 μg/mL, standard solution 2_7.3 μg/mL, standard solution 3_15.2 μg/mL, standard solution 4 29.0 μg/mL, standard solution 5 61.0 μg/mL, and standard solution 6 121.0 μg/mL), and approximating the plotted absorbance change amounts with the polygonal line. From FIG. 16, the calibration curve generated by the method of the first embodiment substantially coincides with the calibration curve generated by the method of the related art.

Here, the standard solutions 1 to 6 of the lot D are regarded as samples having unknown concentrations, are reacted with the reagent (lot C) to measure the time course data, and the concentrations of the standard solutions 1 to 6 (lot D) are quantified by comparison with the calibration curve data (FIG. 15) generated by the method of the first embodiment. Specifically, in each of the pieces of time course data of the standard solutions 1 to 6 (lot D), the absorbance change amounts obtained by subtracting the average of the absorbances at the points 18 and 19 from the average of the absorbances at 33 and 34 points are compared with the calibration curve data, and the concentrations of the component to be measured in the standard solutions 1 to 6 are quantified. Table 6 illustrates results and accuracy.

[Table 6]

Table 6 Results and accuracy of quantification of the concentrations of the component to be measured in the standard solutions 1 to 6 (lot D) by using the calibration curve data generated by the method of the first embodiment.

| Sample | Standard solution 1 | Standard solution 2 | Standard solution 3 | Standard solution 4 | Standard solution 5 | Standard solution 6 |
|---|---|---|---|---|---|---|
| (1) Known concentration [μg/mL] | 0.0 | 7.3 | 15.2 | 29.0 | 61.0 | 121.0 |
| (2) Quantification result [μg/mL] | 0.6 | 8.0 | 15.7 | 28.9 | 60.6 | 121.8 |
| Accuracy ((2) ÷ (1) × 100%) | - | 109.9% | 103.6% | 99.8% | 99.4% | 100.7% |

The obtained accuracy is confirmed to be within 85% to 115% of an expected measurement value. Here, the expected measurement value corresponds to a known concentration.

<First embodiment: second example of generation of calibration curve and calculation of calibration factor>

Next, the case of a high-sensitivity CRP item will be introduced. First, the data for converting photometric points to concentrations is set. Here, since the derivation example described above is followed, data obtained by generating the calibration curve by the method of the related art is required. This data is acquired by using the following reagents and standard solutions.

·Reagent: lot E
·Standard solution group: lot F, concentrations of 3 points.
·Concentration of standard solution group (lot F): standard solution 1 0.0 mg/dL, standard solution 2 0.2 mg/dL, standard solution 3 1.0 mg/dL.

First, the reagent (lot E) and the standard solution group (lot F) are reacted to acquire the time course data of the standard solution group (standard solutions 1 to 3), and two arithmetic points (20 and 34) are used to calculate the scattered light intensity change amount between these points. Here, the data of the point immediately before each point is also used, and the average of the scattered light intensities at points 19 and 20 is subtracted from the average of the scattered light intensities at points 33 and 34 to obtain the scattered light intensity change amount. Subsequently, the time course data of the standard solution 3 in the standard solution group (lot F) is processed by Expression (3). X is 18 to 34 points.

Data at an X-th point = (average value of scattered light intensities at points X and (X - 1)) - (average of scattered light intensities at points 19 and 20) ··· Expression (3)

The time course data after the processing is fitted with an exponential function. At this time, fitting is divided between before 21 points and after 21 points with the photometric point 21 as a boundary. The photometric point is calculated by substituting each of the scattered light intensity change amounts of the standard solution group calculated above into the obtained fitting expression. Here, although the fitting is performed by dividing the data before 21 points and after 21 points, it is not necessarily required to perform the fitting by dividing the data, and it is desirable that the fitting is performed under a condition that the fitting line most matches the time course data after the processing.

FIG. 17 illustrates an example in which the calculated photometric point is input to a photometric point field in a calibration setting screen example.

Next, the concentration information is set. The reagent and the standard solution used for acquiring the time course data used for generating the calibration curve are as follows. The lots of the reagent and the standard solution used at this time are different from the lot used in the setting of the data for converting photometric points to concentrations.

·Reagent: lot G
·Standard solution: lot H, only concentration of standard solution 3 is used among 3 points.
·Concentration of standard solution (lot H): standard solution 3 1.0 mg/dL (for reference, the concentration other than standard solution 3 is described. standard solution 1 0.0 mg/dL, standard solution 2 0.2 mg/dL)

Here, the concentration is calculated by using Expression (1). The derived concentration information of the component to be measured is as illustrated in a concentration field in the calibration setting screen example illustrated in FIG. 17.

Finally, the calibration curve is generated. The time course data acquired by reacting the reagent (lot G) with the standard solution 3 (lot H) is processed by using Expression (3) and is fitted with an exponential function to obtain a fitting expression. At this time, fitting is divided between before 21 points and after 21 points with the photometric point 21 as a boundary. Since it is desirable that fitting conditions adopted when the data for converting photometric points to concentrations is set are applied, fitting is performed under the same conditions.

FIG. 18 illustrates a fitting line for data obtained by processing the time course data representing the reaction between the reagent (lot G) and standard solution 3 (lot H).

FIG. 19 illustrates the fitting line after data processing of the standard solution 3 (lot H) and the scattered light intensity change amount (output information) corresponding to the photometric points illustrated in FIG. 17. The photometric points in FIG. 17 are substituted into the fitting expression, and the scattered light intensity change amounts corresponding to the calibration curve points are calculated.

Table 7 shows the photometric points and the scattered light intensity change amounts (output information) in FIG. 19 in addition to the calibration curve points and the concentrations.

[Table 7]

Table 7 Relationship between calibration curve point, concentration, photometric point, and scattered light intensity change amount

| Calibration curve point | 1 | 2 | 3 |
|---|---|---|---|
| Concentration (mg/dL) | 0.0 | 0.2 | 1.0 |
| Photometric point | 20.2 | 22.4 | 34.2 |
| Scattered light intensity change amount | 4 | 538 | 1553 |

FIG. 20 illustrates the generated calibration curve. The scattered light intensity change amounts are plotted with respect to the concentrations, and the calibration curve is generated by approximation with a polygonal line. In this example, the calibration curve type is a polygonal line, and examples of the calibration factor include the scattered light intensity change amount at each calibration curve point and the slope of each concentration section. The scattered light intensity change amount at each calibration curve point is as the scattered light intensity change amount shown in Table 7. The slope of each concentration section is, for example, as follows. When the CRP concentration is 0.0 mg/dL or more and less than 0.2 mg/dL, the slope is (538 - 4)/(0.2 - 0.0) = 2670.0, and when the CRP concentration is 0.2 mg/dL or more, the slope is (1553 - 538)/(1.0 - 0.2) ≈ 1268.8.

FIG. 21 illustrates an example in which the calibration curve generated by the method of the first embodiment (FIG. 20) and the calibration curve generated by the method of the related art are superimposed. The calibration curve generated by the method of the related art is obtained by plotting the scattered light intensity change amount obtained by subtracting the average of the scattered light intensities at the points 19 and 20 from the average of the scattered light intensities at the points 33 and 34 by using the time course data obtained by treating the standard solutions 1 to 3 (lot H) as the standard solution group and reacting the standard solution with the reagent (lot G) with respect to the concentrations of the standard solutions 1 to 3 (lot H) (standard solution 1 0.0 μg/mL, standard solution 2 0.2 mg/dL, standard solution 3 1.0 μg/mL), and approximating the plotted scattered light intensity change amounts with the polygonal line. From FIG. 21, the calibration curve generated by the method of the first embodiment substantially coincides with the calibration curve generated by the method of the related art.

Here, the standard solutions 1 to 3 of the lot H are regarded as samples having unknown concentrations, are reacted with the reagent (lot G) to measure the time course data, and the concentrations of the standard solutions 1 to 3 (lot H) are quantified by comparison with the calibration curve data (FIG. 20) generated by the method of the first embodiment. Specifically, in each of the pieces of time course data of the standard solutions 1 to 3 (lot H), the scattered light intensity change amounts obtained by subtracting the average of the scattered light intensities at the points 19 and 20 from the average of the scattered light intensities at the points 33 and 34 are compared with the calibration curve data, and the concentrations of the component to be measured in the standard solutions 1 to 3 are quantified. Table 8 shows results and accuracy.

[Table 8]

Table 8 Results and accuracy of quantification of the concentrations of the component to be measured in the standard solutions 1 to 3 (lot H) by using the calibration curve data generated by the method of the first embodiment.

| Sample | Standard solution 1 | Standard solution 2 | Standard solution 3 |
|---|---|---|---|
| (1) Known concentration [mg/dL] | 0.0 | 0.2 | 1.0 |
| (2) Quantification result [mg/dL] | 0.00 | 0.21 | 1.00 |
| Accuracy ((2) ÷ (1) × 100%) | - | 102.8% | 100.5% |

The obtained accuracy is confirmed to be within 90% to 110% of an expected measurement value. Here, the expected measurement value corresponds to a known concentration.

Here, although the calculation example of the polygonal line-type calibration factor has been described, the calculation method is not limited thereto. The calibration factor and the calculation method thereof vary depending on the type of the calibration curve (linear, polygonal line, spline, and the like).

<First embodiment: conclusion>

The automatic clinical analyzer 100 according to the first embodiment specifies the point matching the photometric point indicated in the "data for converting photometric points to concentrations" among the pieces of time course data of the standard solution N by applying the "data for converting photometric points to concentrations" to the time course data obtained by measuring the time course of the standard solution N. This photometric point information is information necessary for extracting the light amount data corresponding to the calibration data obtained by measuring the standard solution group (standard solutions 1 to N) from only the time course data of the standard solution N, and is set separately independently of the measurement of the standard solution N. The photometric point information is associated with the information corresponding to the concentration of the component to be measured in the standard solution group. The specified point includes the photometric point and the light amount data. The calibration curve representing the relationship between the light amount data and the concentration of the component to be measured is generated by converting the photometric point information among the specified points into the concentration of the component to be measured according to the "data for converting photometric points to concentrations". As a result, the pieces of calibration data of the standard solutions 1 to N can be incorporated while only the standard solution N is actually measured. Accordingly, the calibration curve equivalent to the calibration curve generated by using the standard solution group (all of the standard solutions 1 to N) can be obtained by measuring only the standard solution N.

In the above embodiment, although the calibration curve generation method in a case where the standard solution N having the highest concentration of the component to be measured is used has been described, it is not necessarily required to use the standard solution N, and the calibration curve may be generated by the same method as the content described above by using only a standard solution (N-n) (n is an integer, $0 < n < N$) having a concentration that can extrapolate the reaction of the component to be measured having the highest concentration contained in the standard solution N. In this case, it is also possible to generate the calibration curve incorporating calibration data of the standard solutions 1 to N while only the standard solution (N-n) is actually measured. Accordingly, the calibration curve equivalent to the calibration curve generated by using the standard solution group (all of the standard solutions 1 to N) can be obtained by measuring only the standard solution (N-n).

In a case where the lot of the standard solution group to be used when the data for converting photometric points to concentrations is obtained is different from the lot of the standard solution for obtaining the time course data for calibration curve generation, the automatic clinical analyzer 100 according to the first embodiment generates the calibration curve after a difference in concentration of the component to be measured between the lots is corrected according to Expression (1). As a result, once the photometric point information is acquired, it is not necessary to designate the lot of the standard solution to be used for obtaining the time course data for calibration curve generation or the concentration of the component to be measured contained in the standard solution. That is, the calibration curve can be generated only by measuring one standard solution (standard solution N or standard solution (N-n)) of a lot different from the lot of the standard solution group used for acquiring the data for converting photometric points to concentrations.

In the first embodiment, the data for converting photometric points to concentrations may be acquired by actually measuring the standard solution group (standard solutions 1 to N) by using the automatic clinical analyzer 100, or may be acquired by reading out the data for converting photometric points to concentrations acquired in advance. The data for converting photometric points to concentrations is not limited to a method for reading out from a memory attached to the automatic clinical analyzer, and may be acquired by using communication means through the Internet or the like. Alternatively, the input may be performed via the input screen illustrated in FIG. 12 or the like. As a result, the data for converting photometric points to concentrations can be acquired in various forms in accordance with operating conditions of the automatic clinical analyzer 100 and the like.

<Second embodiment>

In a second embodiment of the present invention, a case where a standard solution 1 having a zero concentration that does not contain a component to be measured in addition to a standard solution N having a maximum concentration is measured for inspection items in which the number of standard solutions is N ($N \geq 3$) or more and a calibration curve is generated by using data corresponding to calibration curve points 2 to N extracted from time course data of the standard solution N and data of a calibration curve point 1 extracted from time course data of the standard solution 1 by the same method as in the first embodiment will be described. This embodiment is different from the first embodiment in that not only the time course data of the standard solution N having the maximum concentration but also data obtained by actually measuring the standard solution 1 in which the component to be measured has the zero concentration is used. In the second embodiment, it is possible to accurately reflect an influence in a case where a non-specific reaction not related to the component to be measured occurs on the calibration curve.

So far, there is two-point calibration as calibration using two standard solutions of a standard solution having a zero concentration and a standard solution having any known concentration other than zero concentration. In the two-point calibration, calibration factors (reagent blank value and K value) in the existing calibration curve are updated by using pieces of data of two standard solutions. Specifically, the reagent blank value (blank absorbance, blank scattered light intensity, or both thereof) is corrected by using the standard solution having the zero concentration, and the K value (K factor) is updated by using the standard solution having any known concentration other than the zero concentration. An invention according to the second embodiment is to newly generate a calibration curve by using multi-point data corresponding to the calibration curve points 2 to N extracted from the time course data of the standard solution N and data of the calibration curve point 1 extracted from the time course data of the standard solution 1, and is an application of two-point calibration.

Since a configuration of the automatic clinical analyzer and setting of the data for converting photometric points to concentrations are similar to the first embodiment, the description thereof will not be repeated, and only components different from the first embodiment will be described.

<Second embodiment: acquisition of time course data for calibration curve generation>

The acquisition of the time course data used for generating the calibration curve in the second embodiment will be described. First, calibration information and analysis parameters are set for an inspection item that requires to be calibrated.

FIG. 22 illustrates an example of a setting screen of calibration information in the second embodiment. The calibration information includes a standard solution lot, concentrations of the standard solution 1 and the standard solution N to be used, a position number when the sample cup 102 storing the standard solution 1 and the standard solution N is installed on the sample disk 103, the number of calibration curve data points, and a concentration and photometric point information at the time of generating the calibration curve for the number of data points. In FIG. 22, the lot of the standard solution: BBB, the concentration of the standard solution 1: 0, the concentration of the standard solution N: Z, the installation position of the standard solution 1: 13, the installation position of the standard solution N: 14, the number of calibration curve data points: N, the concentrations: C1 to CN, and the pieces of photometric point information: P2 to PN (photometric point corresponding to C1 cannot be input and displayed) are set.

The reason why the photometric point corresponding to C1 cannot be input and displayed is as follows. As the standard solution 1, a standard solution whose concentration of the component to be measured is zero is typically used (FIG. 22: as input to the concentration of the standard solution). In this case, the standard solution 1 usually does not react with the reagent, and a change over time is not observed in the time course data. However, this standard solution may actually slightly react with the reagent, and a change in a light amount may be obtained. Thus, in the second embodiment, light amount data for generating the calibration curve is obtained by actual measurement for the standard solution 1. Accordingly, since calibration curve generation data of the standard solution 1 is calculated by using an arithmetic point designated by an analysis parameter, photometric point information to be applied to the time course data of the standard solution N is unnecessary for C1 and cannot be input.

The analysis parameter includes information such as a dispensing amount of a sample or a reagent and an arithmetic point used for data processing. Information other than the installation position of the standard solution is given from, for example, the manufacturer that provides the reagent and the standard solution. It is desirable that an operator can optionally set the installation position of the standard solution. The calibration information and the analysis parameter may be input from the operation unit 122, may be read into the storage unit 121a via a storage medium such as a CD-ROM, or may be read via the communication interface 124. Alternatively, when the information is stored in the storage unit 121a in the past, the information may be called. The concentration and the photometric point which are a part of the calibration information correspond to the data for converting photometric points to concentrations. In a case where the calibration curve data generated by the method of the related art and the time course data of the standard solution having the highest concentration used for generating the calibration curve are present in the storage unit 121a, the concentration and the photometric point calculated by the analysis unit 121b may be reflected by using these pieces of data and the concentration information of the standard solution N. An example of the calculation method is as described in the first embodiment. FIG. 22 illustrates an example of the setting screen on which the specific concentration and photometric point information can be seen, but the setting screen may be a setting screen in which these are hidden. The configured information is stored in the storage unit 121a, is read out by the analysis unit 121b, and is used for generating the calibration curve.

Subsequently, the reagent bottle of the item is installed on the reagent disk 106, and the standard solution 1 and the standard solution N are installed on the sample disk 103. Thereafter, a calibration request is input via the operation unit 122 or the communication interface 124. The input content is transmitted to the data processing unit 121, the measurement program of the calibration curve generation data stored in the storage unit 121a is executed, and the control program runs. Each mechanism is caused to perform analysis by the control program causing the control circuit to operate and the control circuit causing the drive unit to operate. Since a specific analysis operation is similar to the first embodiment, the description thereof is omitted here. The pieces of acquired time course data of the standard solution 1 and the standard solution N are stored in the storage unit 121a, are read out by the analysis unit 121b, and are used for generating the calibration curve. Here, in a case where the time course data is acquired multiple times in each standard solution, when the calibration curve is generated, data obtained by averaging the pieces of data may be used as input information, or any one thereof may be selected and used as the input information.

<Second embodiment: generation of calibration curve>

The generation of the calibration curve in the second embodiment will be described. The calibration information, the arithmetic point of the analysis parameter and the calibration curve type, the pieces of time course data of the standard solution 1 and the standard solution N (here, referred to as absorbance data), and the calibration curve generation program stored in the storage unit 121a are called to the analysis unit 121b. The execution contents of the calibration curve generation program are as follows.

First, the time course data of the standard solution N is processed according to the information of the arithmetic point. The arithmetic point is determined by the inspection item. It is desirable that the processing method is the same as the method for processing the time course data of the standard solution having the known concentration C'N in the setting of the data for converting photometric points to concentrations. For example, here, the arithmetic points are two points of (18 and 30), and A18 is subtracted from all the measured values with the absorbance of the photometric point 18: A18 as a reference. The time course data after the data processing is fitted, and a fitting expression is derived to complement discrete measurement data. A fitting function is, for example, a polynomial function or an exponential function. It is desirable that the same type of function as the fitting function used in the setting of the data for converting photometric points to concentrations is used. The pieces of photometric point information (P2 to PN) set in the calibration information (FIG. 22) are substituted into the obtained fitting expression, and pieces of data ($\Delta$A2 to $\Delta$AN) of the absorbance change amounts are calculated as output information.

FIG. 23 illustrates a fitting line after data processing of the standard solution N and absorbance change amounts: $\Delta$A2 to $\Delta$AN (output information) corresponding to photometric points: P2 to PN.

FIG. 24 illustrates time course data obtained by measuring a time course of the standard solution 1 in which the component to be measured has the zero concentration. Subsequently to FIG. 23, data is extracted from the time course data of the standard solution 1 according to the arithmetic point. Since the arithmetic point is uniquely designated for each inspection item, two points of (18 and 30) used in the above example are used. An absorbance change amount $\Delta$A1 (= absorbance at a 30-th point - absorbance at an 18-th point) for a certain time between the points is calculated.

The pieces of data of the absorbance change amounts are plotted with respect to the concentrations, and the calibration curve is generated by approximating the pieces of data with a mathematical expression of a calibration curve type (linear, polygonal line, spline, and the like) designated by the analysis parameter information and calculating a calibration factor. The calibration factor is coefficient information of an approximate expression such as absorbance at a calibration point (calibration curve point), scattered light intensity, or change amount data thereof, or a slope of the calibration curve. The calibration factor and the calculation method thereof vary depending on the type of the calibration curve (linear, polygonal line, spline, and the like).

FIG. 25 illustrates an example of the calibration curve generated in the second embodiment. The generated calibration curve, the time course data after the processing, and the like are stored in the storage unit 121a. When a sample having an unknown concentration of the component to be measured is measured, the information on the calibration curve is called by the analysis unit 121b and is used for quantification of the concentration of the component to be measured.

Here, although the case where there are two arithmetic points in the processing of the time course data of the standard solution N has been described, there may be one arithmetic point. In the case of one point, data of the point may be used as it is, or an average value of pieces of data before and after the point may be used. Even in a case where there are two arithmetic points, the processing content of the subtraction with measurement data of a calculation start point (corresponding to the point 18 in the above description) as a reference may not be used as described above, and for example, subtraction processing may be performed with an average value of pieces of data of a plurality of points before and after the calculation start point. At this time, also in data of a subtraction target point, the average value of the pieces of data of the plurality of points before and after the point may be used. In a case where data is extracted from the time course data of the standard solution 1 according to the arithmetic point, not only the above-described calculation example but also various calculation expressions may be used in accordance with the number of arithmetic points as in the case of the standard solution N.

In the above embodiment, although the calibration curve generation method in a case where the standard solution N having the highest concentration of the component to be measured and the standard solution 1 having the zero concentration of the component to be measured are used has been described, the calibration curve may be generated by the same method as the content described above by using a standard solution (N-n) (n is an integer, $0 < n < N$) having a concentration that can extrapolate the reaction of the component to be measured having the highest concentration contained in the standard solution N instead of the standard solution N.

<Third embodiment>

In a third embodiment of the present invention, a case where a calibration curve is generated by a tool independent of the automatic clinical analyzer by using a program for executing the contents of the calibration curve generation described in the first and second embodiments will be described. The basic contents of the program will be described below, but are not limited to the following examples.

The program includes, for example, a step (step (1)) of setting the data for converting photometric points to concentrations, a step (step (2)) of extracting the light amount data for calibration curve generation from the time course data of the standard solution N according to the photometric point set in step (1), a step (step (3)) of converting the photometric point information used at the time of data extraction into the concentration information of the component to be measured and associating the concentration information with the extraction data, and a step (step (4)) of plotting the extraction data with the concentration of the component to be measured and generating the calibration curve by approximating the plots by the designated mathematical expression. Since the specific processing content in step (1) is the same as the content described in <First embodiment: setting of data for converting photometric points to concentrations>, redundant description is avoided here. Specific processing contents in steps (2) to (4) are also the same as the contents described in <First embodiment: generation of calibration curve>, and thus, the description thereof is omitted. In this program, for example, step (2) may be a step of extracting the light amount data for generating the calibration curve from the pieces of time course data of the standard solution 1 and the standard solution N as in the second embodiment.

The program of the third embodiment is equipped on an analysis tool or the like independent of the automatic clinical analyzer 100 and operated. Examples of the information used in the program include the calibration curve information (calibration data) generated by the method of the related art, the arithmetic points used at the time of generating the calibration curve, the concentration of the standard solution, and the time course data, and the pieces of concentration information and pieces of time course data of the standard solution N and the standard solution 1 measured after the reagent lot is changed. These pieces of information may be data already stored in an analysis tool equipped with the program. Alternatively, these pieces of information may be input from an operation unit of the analysis tool, or may be read into the analysis tool via an external storage medium or a communication interface. Alternatively, the information acquired by the automatic clinical analyzer connected to the analysis tool may be read from the automatic clinical analyzer into the analysis tool and used, or the information acquired by the automatic clinical analyzer not connected to the analysis tool may be read into the analysis tool via an external storage medium, the Internet, or the like.

In accordance with the program according to the third embodiment, even in the automatic clinical analyzer not equipped with the calibration curve generation unit of the present invention, the calibration curve generated by the analysis tool can be sent to the analyzer by connecting the analysis tool equipped with the program of the third embodiment and the analyzer, and the calibration curve generated by the method of the present invention can also be used in the analyzer. The calibration curve generated by the analysis tool may be stored in the storage unit in the analysis tool without being sent to the analyzer, the time course data of the sample having the unknown concentration of the component to be measured, which is measured by the analyzer, may be read into the analysis tool, and the concentration of the component to be measured may be quantified by using the calibration curve data in the analysis tool. In this case, the quantification result of the concentration of the component to be measured may be sent to the analyzer and may be displayed on the analyzer, may be sent to an in-hospital network via a communication interface connected to the analyzer, or may be directly sent from the analysis tool to the in-hospital network. Here, the connection between the analysis tool and the analyzer is not essential, and the concentration of a specimen having the unknown concentration of the component to be measured may be quantified by using the calibration curve generated in the present invention by adopting means for exchanging necessary information through an external storage medium, the Internet, or the like.

<Fourth embodiment>

In a fourth embodiment of the present invention, an automatic clinical analyzer 100 and an analysis tool equipped with a function of comparing the calibration curve generated in the first to third embodiments with calibration curve data stored in the automatic clinical analyzer 100 or the analysis tool equipped with the calibration curve generation program, performing an error check, reporting an error with respect to the generated calibration curve in a case where the error check corresponds to the setting of the error check, and selecting whether or not to use the calibration curve will be described. Here, the calibration curve data stored in the automatic clinical analyzer or the analysis tool equipped with the calibration curve generation program means calibration curve data generated by the method of the related art or previous data of the calibration curve generated by the method of the present invention.

Since the configuration example of the automatic clinical analyzer is as described in the first embodiment, the description will be given focusing on the function of performing the error check, reporting the error, and selecting whether to use the automatic clinical analyzer. When the calibration curve is generated by the method of the present invention in the analysis unit 121b, error determination information stored in the storage unit 121a is read out to the analysis unit 121b and is compared with the generated calibration curve data to check whether or not there is the error. As the content of the error check, for example, the coefficient information or the like in the expression of the calibration curve such as the calibration factor is compared between the stored calibration curve data and the calibration curve data of the present invention to calculate a degree of deviation, and an error is reported in a case where the deviation exceeds a set threshold. A result of the error check is sent to the storage unit 121a together with the generated calibration curve information. In a case where there is the error information, the error information, the calibration curve data, and a confirmation request as to whether or not to use the calibration curve are sent from the storage unit 121a to the in-hospital network or the like via the display unit 122a or the communication interface 124 and are displayed. It is preferable that this display can be selected to be displayed or not to be displayed by a user. The selection as to whether to use may be performed by touching the screen of the display unit 122a, or may be performed by selecting a screen displayed on the screen of the display unit 122a with the mouse 122c. Alternatively, the information selected in the in-hospital network may be sent to the storage unit 121a via the communication interface 124.

Next, the error check in the analysis tool equipped with the calibration curve generation program, the reporting of the error, and the selection function of the calibration curve to be used will be described. This function may be incorporated in the calibration curve generation program described in the third embodiment as step (5), or an analysis unit in the analysis tool may have an error determination function.

In a case where the calibration curve is incorporated into the calibration curve generation program described in the third embodiment as step (5), for example, after the calibration curves are generated in steps (1) to (4), a calibration curve check program runs as step (5), and calibration curve data for comparison stored in the storage unit in the analysis tool is read out to the program and is compared with the generated calibration curve data to check whether or not there is the error. The contents of the error check are as described above. The result of the error check is sent to the storage unit in the analysis tool together with the generated calibration curve information. In a case where there is the error information, the error information, the calibration curve data, and a confirmation request as to whether or not to use the calibration curve are displayed on a display unit of the analysis tool. It is preferable that this display can be selected to be displayed or not to be displayed by a user. Information such as the confirmation request may be sent to the storage unit 121a of the automatic clinical analyzer connected to the analysis tool, and may be sent to the in-hospital network or the like via the display unit 122a or the communication interface 124 and may be displayed. The selection result of whether or not to use the calibration curve is sent to the storage unit in the analysis tool, and in a case where "use" is selected, the calibration curve generated in the first to third embodiments is used.

In a case where the analysis unit in the analysis tool has the error determination function, for example, after the calibration curve is generated by the calibration curve generation program, the stored calibration curve data for comparison is read out from the storage unit to the analysis unit, and is compared with the information in the calibration curve to check whether or not there is the error. The contents of the error check are as described above. The result of the error check is sent to the storage unit in the analysis tool. In a case where there is the error information, the error information, the calibration curve data, and the confirmation request as to whether or not to use the calibration curve are displayed on the display unit of the analysis tool. It is preferable that this display can be selected to be displayed or not to be displayed by a user. Information such as the confirmation request may be sent to the storage unit 121a of the automatic clinical analyzer connected to the analysis tool, and may be sent to the in-hospital network or the like via the display unit 122a or the communication interface 124 and may be displayed. The selection result of whether or not to use the calibration curve is sent to the storage unit in the analysis tool, and in a case where "use" is selected, the calibration curve generated in the first to third embodiments is used.

Here, although the function of selecting whether or not to use the generated calibration curve data when the error is reported has been described, a function of selecting a calibration curve to be used may be added in a case where "not to use" is selected.

<Fifth embodiment>

In a fifth embodiment of the present invention, a case where a sample having an unknown concentration of the component to be measured is measured by using the calibration curve generated in the first to third embodiments or the calibration curve generated in the first to third embodiments and selected in the fourth embodiment and the concentration thereof is quantified will be described.

First, the acquisition of the time course data of the sample containing the component to be measured having the unknown concentration will be described. The reagent bottle of the item is installed on the reagent disk 106, and the sample is installed on the sample disk 103. Thereafter, a request for sample measurement is input via the operation unit 122 or the communication interface 124. The input content is transmitted to the data processing unit 121, the sample measurement program stored in the storage unit 121a is executed, and the control program runs. Each mechanism is caused to perform analysis by the control program causing the control circuit to operate and the control circuit causing the drive unit to operate. Since the specific analysis operation is similar to the contents described in <First embodiment: acquisition of time course data for calibration curve generation>, the description thereof is omitted here. The acquired time course data is stored in the storage unit 121a.

Next, the quantification of the concentration of the component to be measured will be described. The time course data, the calibration curve data, and the data analysis program are read out from the storage unit 121a to the analysis unit 121b. From the time course data of the sample having the unknown concentration of the component to be measured, the absorbance, the scattered light intensity, or the change amount data thereof are extracted based on the arithmetic point designated for each measurement item. The extracted data is compared with the light amount data of the calibration curve to quantify the concentration of the component to be measured in the sample. The extracted data, the concentration information after quantification, the error information, and the like are stored in the storage unit 121a and are displayed on the display unit 122a of the operation unit 122. As necessary, in addition to being printed out by the printer 123, these pieces of information are sent to a network or the like in a hospital through the communication interface 124. Here, although an example in which the concentration of the component to be measured in the sample is quantified by the analysis unit 121b in the automatic clinical analyzer has been described, the concentration of the component to be measured in the sample may be quantified by reading the acquired time course data into another tool equipped with the calibration curve generation program as in the third embodiment and comparing the calibration curve data with the sample measurement data in the tool.

<About modification examples of present invention>

The present invention is not limited to the aforementioned embodiments, and includes various modification examples. The aforementioned embodiments are described in detail in order to facilitate easy understanding of the present invention, and are not limited to necessarily include all the described components. Some of the components of a certain embodiment can be substituted into the components of another embodiment, and the components of another embodiment can be added to the component of a certain embodiment. The same components or other components can be added, removed, and substituted to, from, and into some of the components of each of the aforementioned embodiments.

In the above embodiments, although a case where the latex immunoturbidimetry item is taken as an example, a latex reagent sensitized with an antibody or an antigen and a standard solution or a sample derived from a living body containing the component to be measured (antigen or antibody) are mixed, and a latex agglutination reaction caused by an antigen-antibody reaction is measured by the light absorption or the scattered light has been described, the inspection item measured in the present invention is not limited to the latex immunoturbidimetry item. For example, a system in which an insoluble carrier sensitized with the antibody or the antigen (silica particles, magnetic particles, metal colloids, and the like) is mixed with the standard solution or the sample derived from the living body containing the component to be measured (antigen or antibody), and an agglutination reaction of particles caused by the antigen-antibody reaction is measured by the light absorption or the scattered light may be used.

In other words, as long as the time course data obtained by measuring the standard solution N ($N \geq 2$) having the highest concentration of the component to be measured among two or more standard solutions (two or more concentrations) includes the reaction in the standard solution having a concentration lower than the standard solution N and the calibration curve generated according to the time course data of the standard solution N and the data for converting photometric points to concentrations approximates (a difference between two standard solutions is within a threshold and the error described in the fourth embodiment does not occur) the calibration curve generated by using the standard solution group (standard solutions 1 to N), the calibration curve generation method according to the present invention can be applied to samples, inspection items, and standard solutions other than the samples, the inspection items, and the standard solutions described in the above embodiments.

The standard solution N is not necessarily used, and even in a case where the standard solution (N-n) (n is an integer, $0 < n < N$) having a concentration that can extrapolate the reaction of the component to be measured having the highest concentration contained in the standard solution N is used instead of the standard solution N, as long as the time course data of the standard solution (N-n) includes the reaction in the standard solution having the concentration lower than the standard solution (N-n), the reaction of the standard solution N can be extrapolated by the time course data, and the calibration curve generated according to the time course data of the standard solution (N-n) and the data for converting photometric points to concentrations approximates the calibration curve generated by using the standard solution group (standard solutions 1 to N), the calibration curve generation method according to the present invention can be applied to samples, inspection items, and standard solutions other than the samples, the inspection items, and the standard solutions described in the above embodiments.

Reference Signs List

| | |
|---|---|
| 100 | automatic clinical analyzer |
| 101 | sample |
| 102 | sample cup |
| 103 | sample disk |
| 104 | reagent |
| 105 | reagent bottle |
| 106 | reagent disk |
| 107 | reaction liquid |
| 108 | cell |
| 109 | reaction disk |
| 110 | sample dispensing mechanism |
| 111 | reagent dispensing mechanism |
| 112 | thermostatic fluid |
| 113 | stirring mechanism |
| 114 | cleaning mechanism |
| 115 | absorbance measurement unit |
| 116 | scattered light measurement unit |
| 117 | drive unit |
| 118 | control circuit |
| 119 | absorbance measurement circuit |
| 120 | scattered light measurement circuit |
| 121 | data processing unit |
| 121a | storage unit |
| 121b | analysis unit |
| 122 | operation unit |
| 122a | display unit |
| 122b | keyboard |
| 122c | mouse |
| 123 | printer |
| 124 | communication interface |

## Claims

**1.** A calibration curve generation method for generating a calibration curve in an automatic clinical analyzer that quantifies a concentration of a component to be measured contained in a specimen, the method comprising:

irradiating, with light, a mixed liquid containing one standard solution in which a concentration of the component to be measured is not zero and also containing a reagent reacting with the component to be measured, thereby measuring a time course in which the component to be measured in the one standard solution reacts;
extracting pieces of calibration data which are a plurality of pieces of light amount data in a plurality of different times from a fitting line for time course data representing the time course in which the component to be measured in the one standard solution reacts; and
generating the calibration curve indicating a relationship between the concentration and the light amount data by converting the plurality of different times into a plurality of concentrations of the component to be measured.

**2.** The calibration curve generation method according to claim 1, wherein
the converting the plurality of different times into the plurality of concentrations of the component to be measured includes:

generating data for converting photometric points to concentrations representing a relationship between a photometric point for extracting a plurality of pieces of light amount data from the fitting line and the concentration of the component to be measured, the plurality of pieces of light amount data being pieces of light amount data corresponding to pieces of calibration data of a standard solution group having a plurality of known concentrations; and

converting the time into the concentration by using the generated data for converting photometric points to concentrations.

3. The calibration curve generation method according to claim 2, wherein the concentration of the one standard solution corresponds to a concentration of a standard solution having a highest concentration in the standard solution group.

4. The calibration curve generation method according to claim 2, wherein the concentration of the one standard solution corresponds to a concentration of a standard solution other than a highest concentration in the standard solution group, and calibration data of a standard solution having a highest concentration is generated by extrapolating the time course data of the one standard solution.

5. The calibration curve generation method according to claim 2, wherein the concentration of the one standard solution corresponds to a concentration of a standard solution of any one of the standard solution group, and in a case where, both the concentrations thereof are different from each other, concentrations of all standard solutions of the standard solution group are corrected by using the concentration of the one standard solution used when the calibration curve is generated.

6. The calibration curve generation method according to claim 2, wherein, in the converting the plurality of different times into the plurality of concentrations of the component to be measured, pieces of separately acquired ones of the data for converting photometric points to concentrations are read out to the automatic clinical analyzer and are used.

7. The calibration curve generation method according to claim 6, wherein the data for converting photometric points to concentrations is stored in an external storage medium.

8. The calibration curve generation method according to claim 2, wherein, in the converting the plurality of different times into the plurality of concentrations of the component to be measured, the data for converting photometric points to concentrations inputted on a user interface is used.

9. The calibration curve generation method according to claim 2, wherein light amount data obtained by actually measuring a standard solution having a zero concentration is used for light amount data corresponding to a standard solution in which the component to be measured has a zero concentration among the plurality of pieces of light amount data.

10. The calibration curve generation method according to claim 1, wherein the calibration curve is generated by a tool independent of the automatic clinical analyzer.

11. The calibration curve generation method according to claim 1, further comprising:

performing error check by comparing the generated calibration curve with calibration curve data acquired in the past; and

reporting an error for the generated calibration curve and displaying a screen for selecting whether or not to use the calibration curve in a case where the error is deviated from a configured threshold in the error check.

12. An automatic clinical analyzer, comprising:

a light irradiation unit that irradiates, with light, a cell storing a mixed liquid of a specimen in which a component to be measured has an unknown concentration and a reagent;

a measurement unit that measures light from the mixed liquid; and

an analysis unit that (1) irradiates, with light, a mixed liquid containing one standard solution in which a concentration of the component is not zero and also containing a reagent reacting with the component, thereby measures a time course in which the component to be measured in the one standard solution reacts, (2) extracts pieces of calibration data which are a plurality of pieces of light amount data in a plurality of different times from a fitting line for time course data representing the time course in which the component in the one standard solution reacts, and (3) quantifies a concentration of the specimen by using a calibration curve indicating a relationship between the concentration and the light amount data, and also using light amount data obtained from time course data in the measurement unit, the calibration curve being generated by converting the plurality of different times into a plurality of concentrations of the component.

**13.** The automatic clinical analyzer according to claim 12, wherein the calibration curve is retained in a storage unit in the automatic clinical analyzer, is read out to the analysis unit, and is used for quantification of the concentration of the component to be measured of the specimen.

**14.** A calibration curve generation program causing a computer to execute processing of generating a calibration curve in an automatic clinical analyzer that quantifies a concentration of a component to be measured contained in a specimen, the program causing the computer to execute:

irradiating, with light, a mixed liquid containing one standard solution in which a concentration of the component to be measured is not zero and also containing a reagent reacting with the component to be measured, thereby measuring a time course in which the component to be measured in the one standard solution reacts;
extracting pieces of calibration data which are a plurality of pieces of light amount data in a plurality of different times from a fitting line for time course data representing the time course in which the component to be measured in the one standard solution reacts; and
generating the calibration curve indicating a relationship between the concentration and the light amount data by converting the plurality of different times into a plurality of concentrations of the component to be measured.

FIG. 1

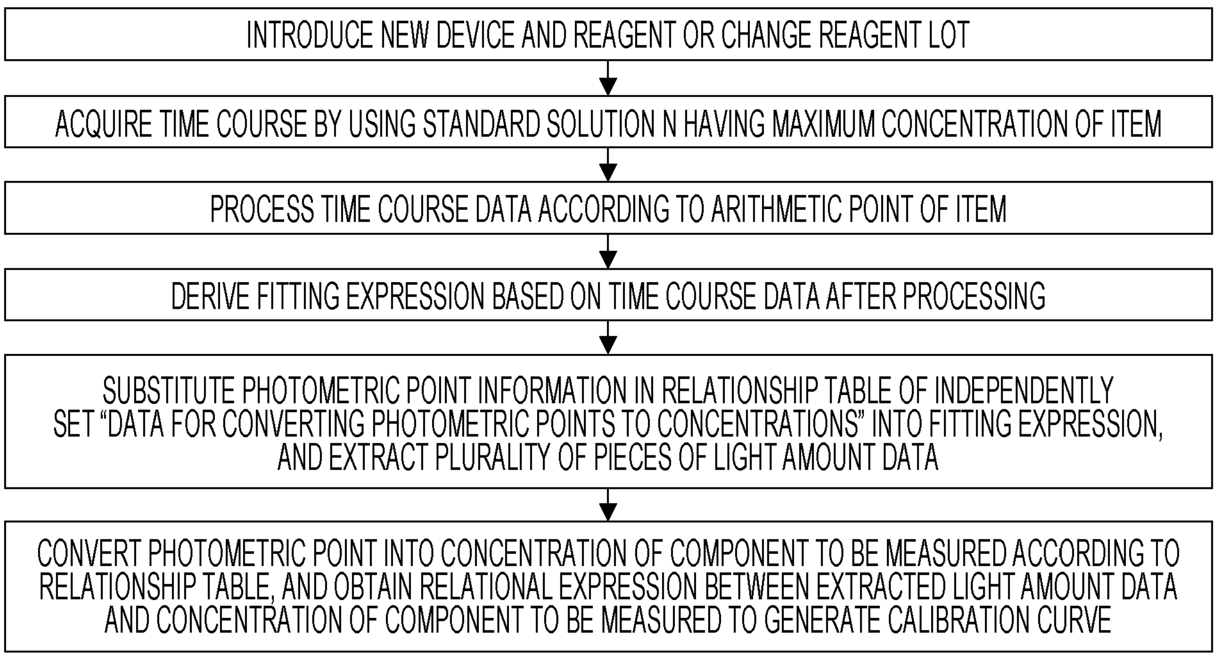
INTRODUCE NEW DEVICE AND REAGENT OR CHANGE REAGENT LOT
ACQUIRE TIME COURSE BY USING STANDARD SOLUTION N HAVING MAXIMUM CONCENTRATION OF ITEM
PROCESS TIME COURSE DATA ACCORDING TO ARITHMETIC POINT OF ITEM
DERIVE FITTING EXPRESSION BASED ON TIME COURSE DATA AFTER PROCESSING
SUBSTITUTE PHOTOMETRIC POINT INFORMATION IN RELATIONSHIP TABLE OF INDEPENDENTLY SET “DATA FOR CONVERTING PHOTOMETRIC POINTS TO CONCENTRATIONS” INTO FITTING EXPRESSION, AND EXTRACT PLURALITY OF PIECES OF LIGHT AMOUNT DATA
CONVERT PHOTOMETRIC POINT INTO CONCENTRATION OF COMPONENT TO BE MEASURED ACCORDING TO RELATIONSHIP TABLE, AND OBTAIN RELATIONAL EXPRESSION BETWEEN EXTRACTED LIGHT AMOUNT DATA AND CONCENTRATION OF COMPONENT TO BE MEASURED TO GENERATE CALIBRATION CURVE

FIG. 2

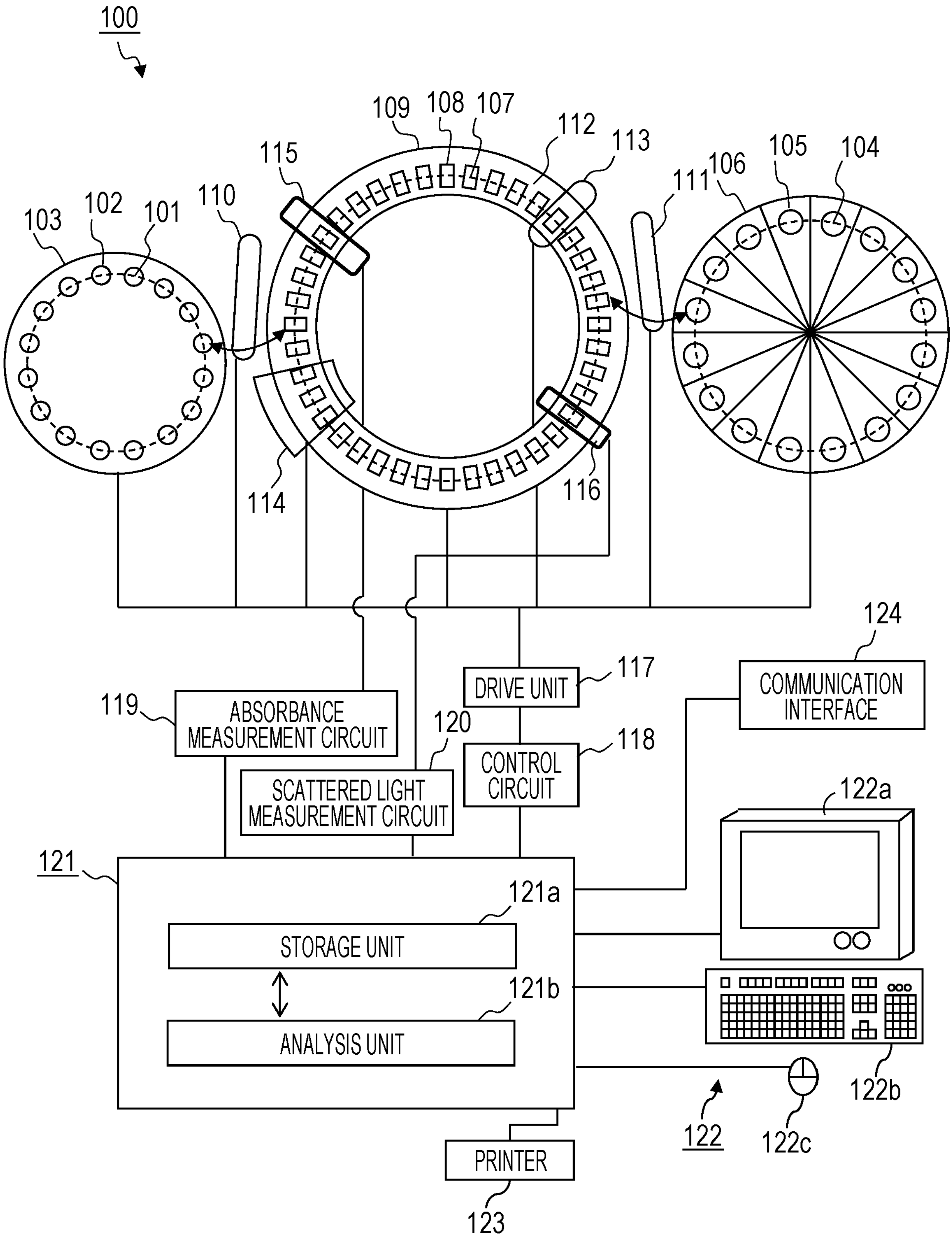
100
101
102
103
104
105
106
107
108
109
110
111
112
113
114
115
116
DRIVE UNIT
117
CONTROL CIRCUIT
118
119
ABSORBANCE MEASUREMENT CIRCUIT
120
SCATTERED LIGHT MEASUREMENT CIRCUIT
124
COMMUNICATION INTERFACE
122a
121
121a
STORAGE UNIT
121b
ANALYSIS UNIT
122b
122
122c
PRINTER
123

FIG. 3

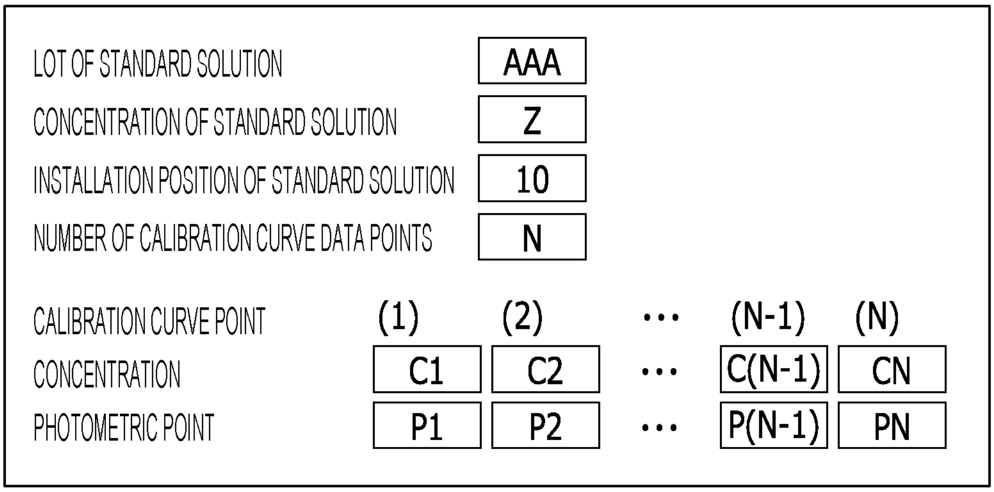
LOT OF STANDARD SOLUTION
AAA
CONCENTRATION OF STANDARD SOLUTION
Z
INSTALLATION POSITION OF STANDARD SOLUTION
10
NUMBER OF CALIBRATION CURVE DATA POINTS
N
CALIBRATION CURVE POINT
(1)
(2)
...
(N-1)
(N)
CONCENTRATION
C1
C2
...
C(N-1)
CN
PHOTOMETRIC POINT
P1
P2
...
P(N-1)
PN

FIG. 4

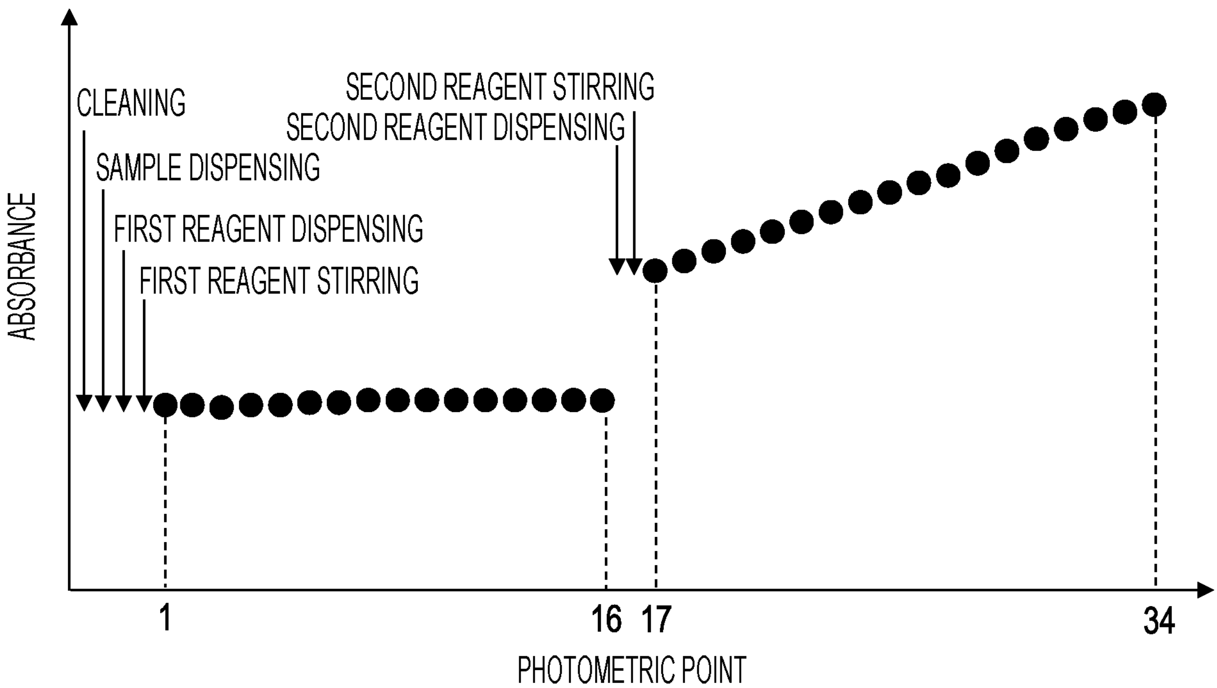
ABSORBANCE
CLEANING
SAMPLE DISPENSING
FIRST REAGENT DISPENSING
FIRST REAGENT STIRRING
SECOND REAGENT STIRRING
SECOND REAGENT DISPENSING
1
16
17
34
PHOTOMETRIC POINT

FIG. 5

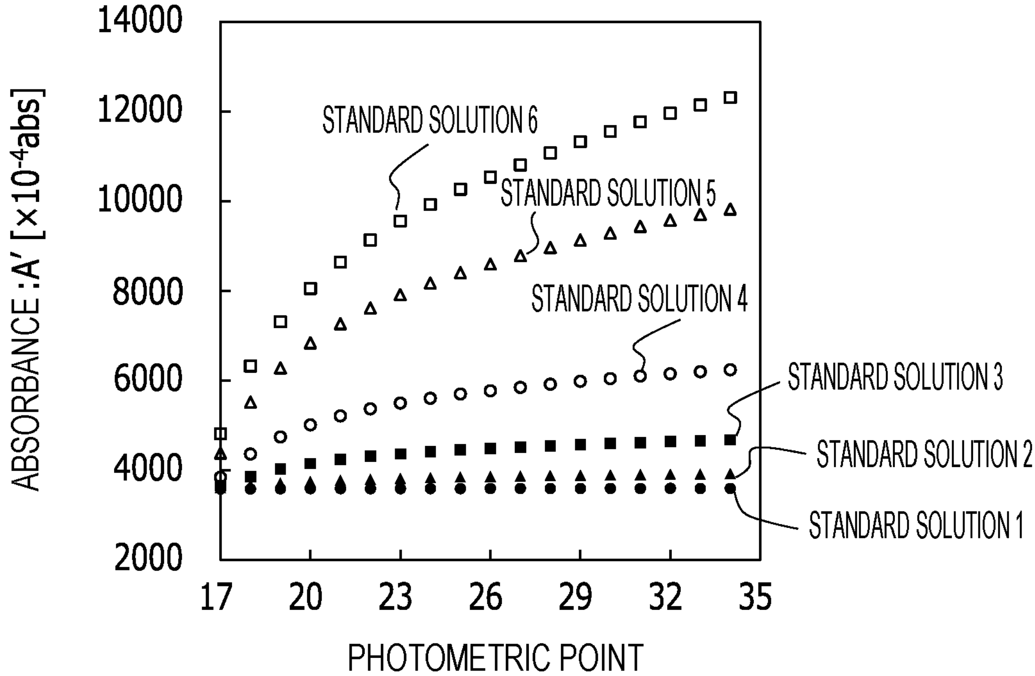
14000
12000
10000
8000
6000
4000
2000
ABSORBANCE :A' [×10⁻⁴abs]
STANDARD SOLUTION 6
STANDARD SOLUTION 5
STANDARD SOLUTION 4
STANDARD SOLUTION 3
STANDARD SOLUTION 2
STANDARD SOLUTION 1
17
20
23
26
29
32
35
PHOTOMETRIC POINT

FIG. 6

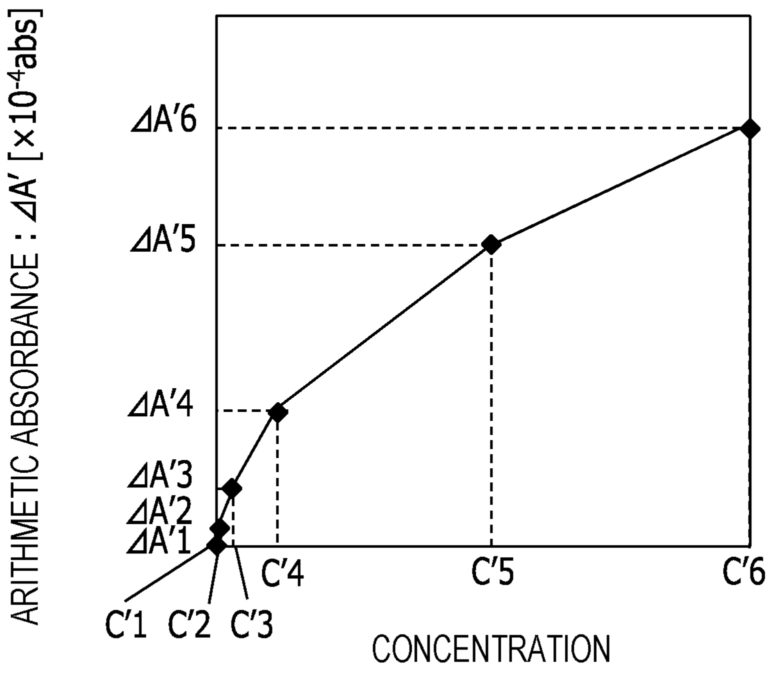
ARITHMETIC ABSORBANCE : ⊿A' [×10⁻⁴abs]
⊿A'6
⊿A'5
⊿A'4
⊿A'3
⊿A'2
⊿A'1
C'1
C'2
C'3
C'4
C'5
C'6
CONCENTRATION

FIG. 7

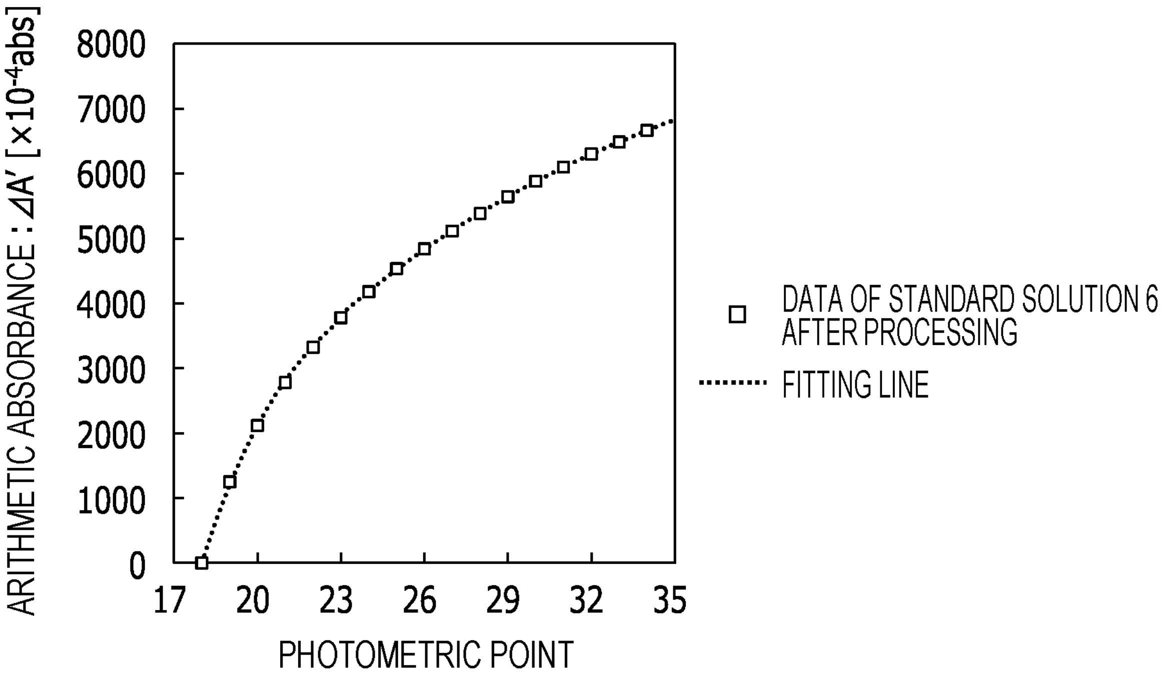
ARITHMETIC ABSORBANCE : ⊿A' [×10⁻⁴abs]
8000
7000
6000
5000
4000
3000
2000
1000
0
17
20
23
26
29
32
35
PHOTOMETRIC POINT
DATA OF STANDARD SOLUTION 6 AFTER PROCESSING
FITTING LINE

FIG. 8

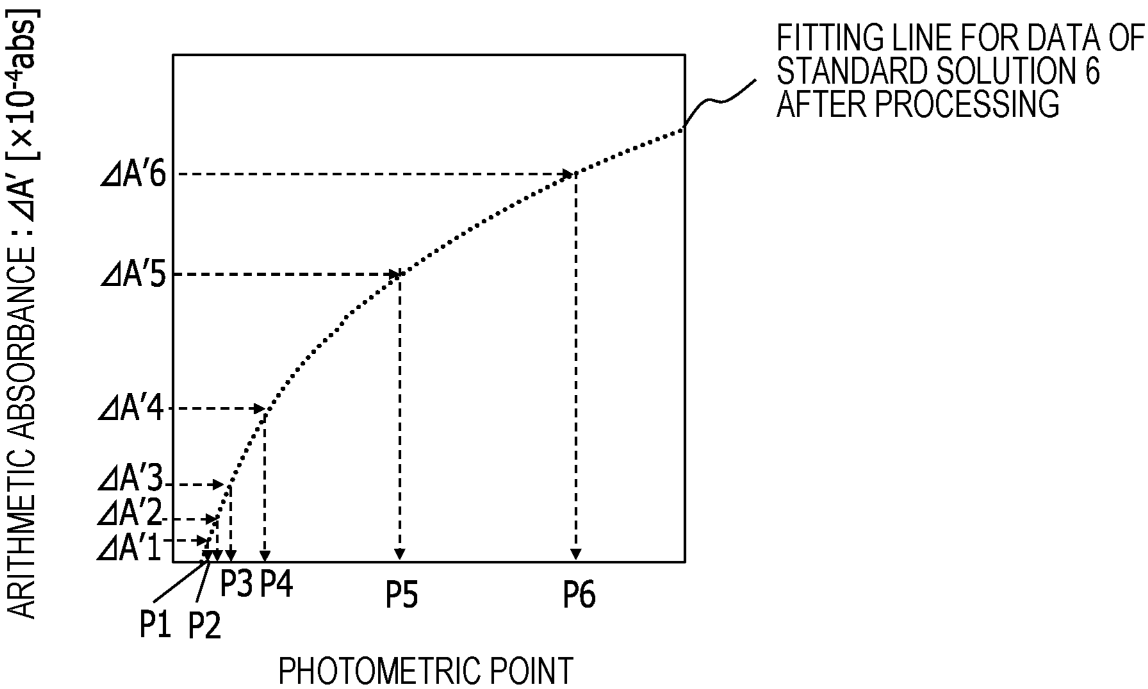
ARITHMETIC ABSORBANCE : ⊿A' [×10⁻⁴abs]
FITTING LINE FOR DATA OF STANDARD SOLUTION 6 AFTER PROCESSING
⊿A'6
⊿A'5
⊿A'4
⊿A'3
⊿A'2
⊿A'1
P1
P2
P3
P4
P5
P6
PHOTOMETRIC POINT

FIG. 9

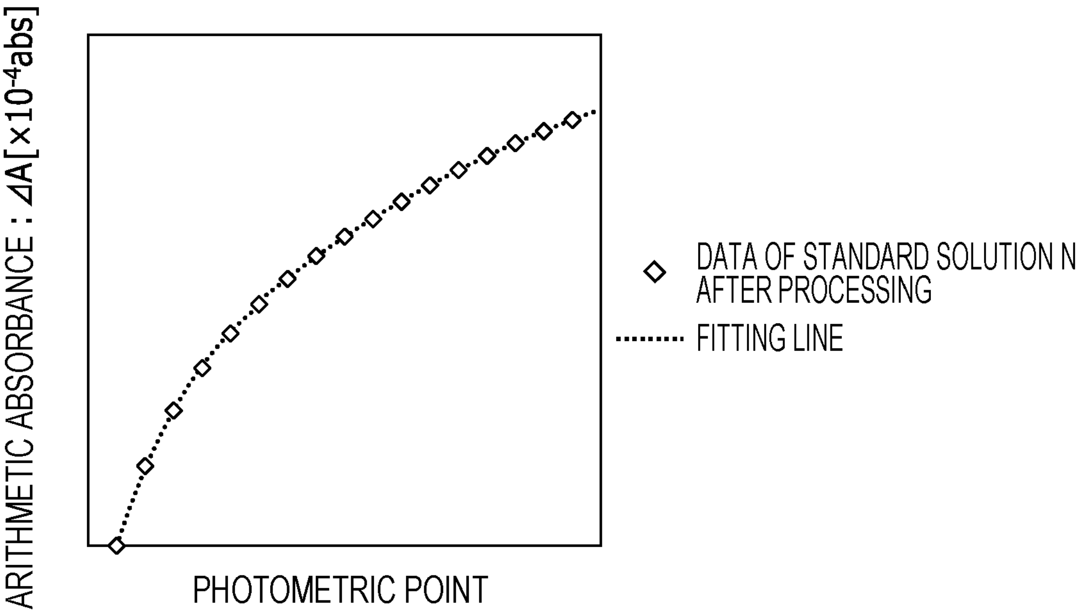
ARITHMETIC ABSORBANCE : ⊿A[×10$^{-4}$abs]
PHOTOMETRIC POINT
DATA OF STANDARD SOLUTION N AFTER PROCESSING
FITTING LINE

FIG. 10

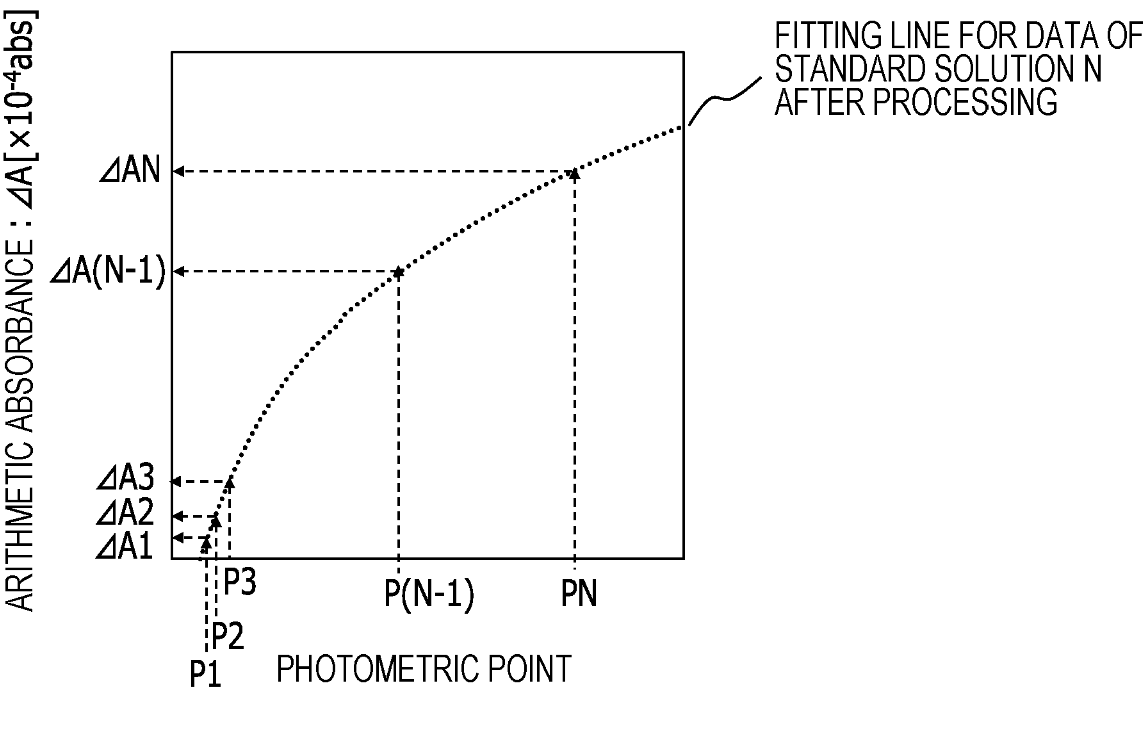
FITTING LINE FOR DATA OF STANDARD SOLUTION N AFTER PROCESSING
ARITHMETIC ABSORBANCE : ⊿A[×10$^{-4}$abs]
⊿AN
⊿A(N-1)
⊿A3
⊿A2
⊿A1
P3
P(N-1)
PN
P2
P1
PHOTOMETRIC POINT

FIG. 11

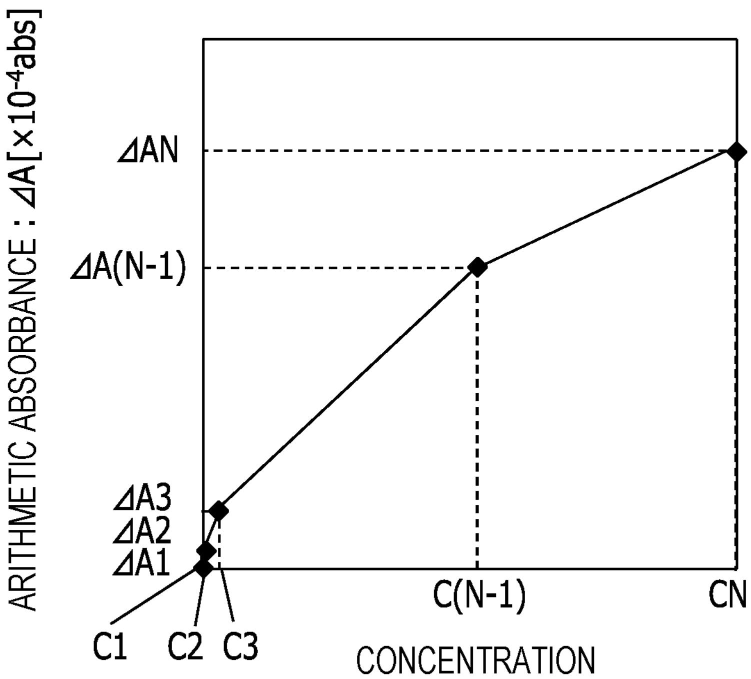


FIG. 12

| | |
|---|---|
| LOT OF STANDARD SOLUTION | D |
| CONCENTRATION OF STANDARD SOLUTION | 121.0 |
| INSTALLATION POSITION OF STANDARD SOLUTION | 11 |
| NUMBER OF CALIBRATION CURVE DATA POINTS | 6 |

| CALIBRATION CURVE POINT | (1) | (2) | (3) | (4) | (5) | (6) |
|---|---|---|---|---|---|---|
| CONCENTRATION | 0.0 | 7.6 | 15.0 | 29.0 | 61.0 | 121.0 |
| PHOTOMETRIC POINT | 19.1 | 19.6 | 20.1 | 21.2 | 23.8 | 34.0 |

# FIG. 13

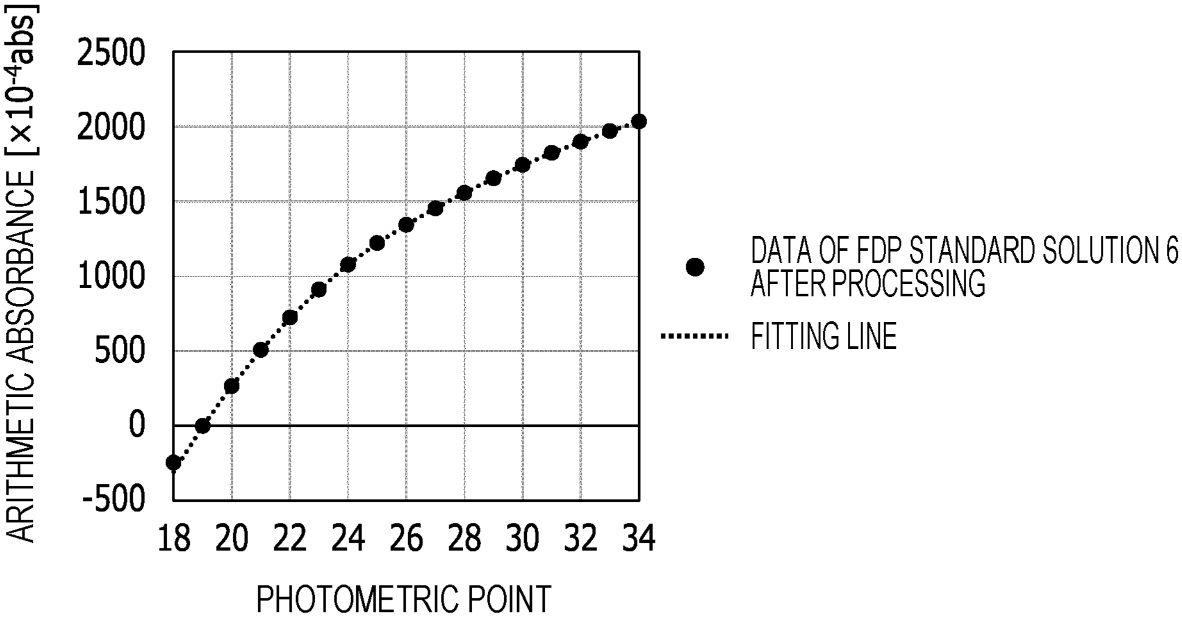
ARITHMETIC ABSORBANCE [×10-4abs]
2500
2000
1500
1000
500
0
-500
18 20 22 24 26 28 30 32 34
PHOTOMETRIC POINT
DATA OF FDP STANDARD SOLUTION 6 AFTER PROCESSING
FITTING LINE

# FIG. 14

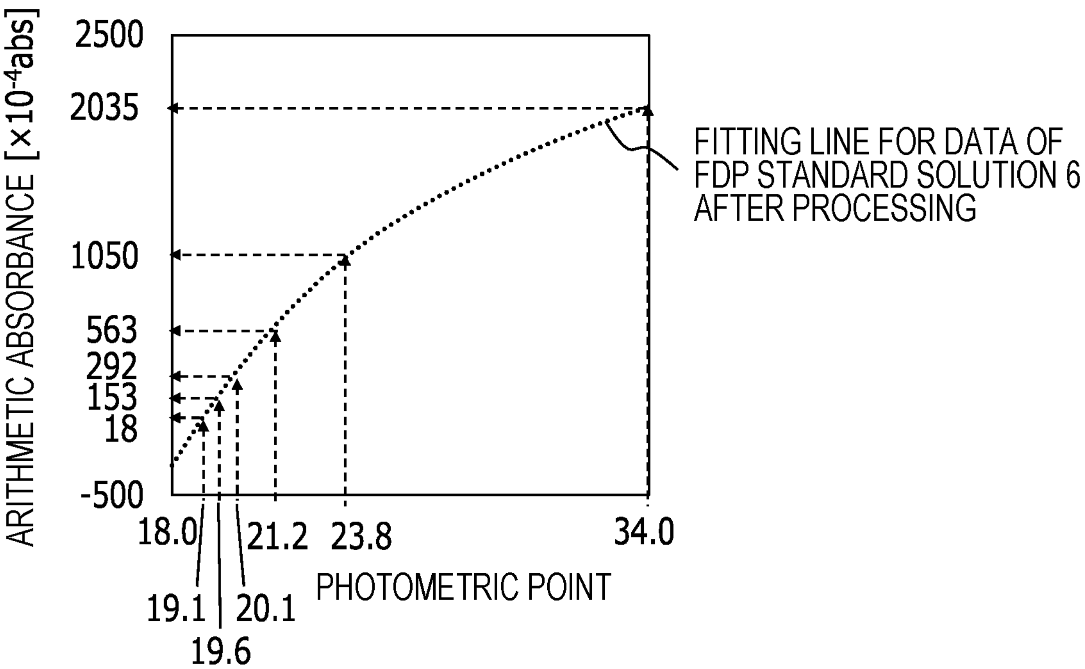
ARITHMETIC ABSORBANCE [×10-4abs]
2500
2035
1050
563
292
153
18
-500
18.0
19.1
19.6
20.1
21.2
23.8
34.0
PHOTOMETRIC POINT
FITTING LINE FOR DATA OF FDP STANDARD SOLUTION 6 AFTER PROCESSING

FIG. 15

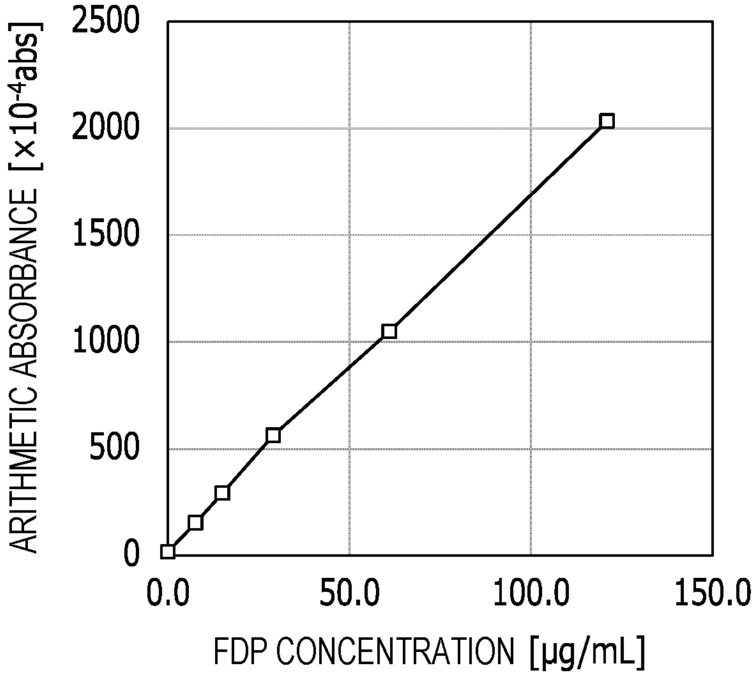
ARITHMETIC ABSORBANCE [×10-4abs]
2500
2000
1500
1000
500
0
0.0
50.0
100.0
150.0
FDP CONCENTRATION [μg/mL]

FIG. 16

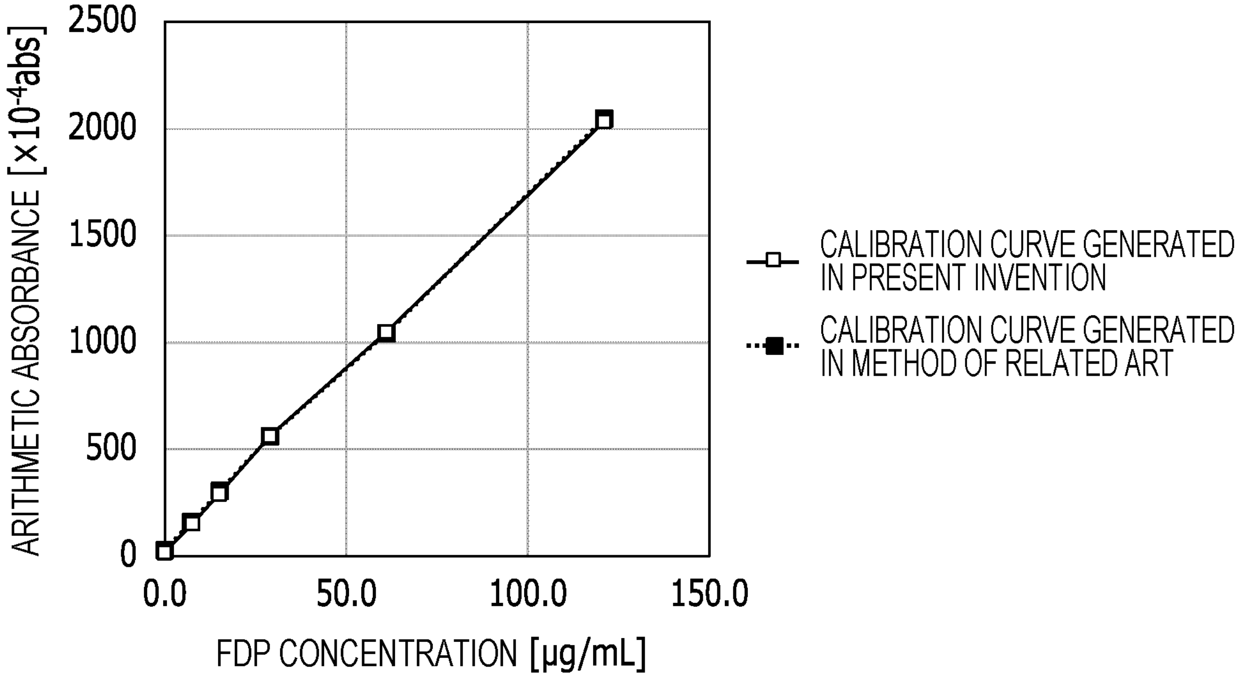
ARITHMETIC ABSORBANCE [×10-4abs]
2500
2000
1500
1000
500
0
0.0
50.0
100.0
150.0
FDP CONCENTRATION [μg/mL]
CALIBRATION CURVE GENERATED IN PRESENT INVENTION
CALIBRATION CURVE GENERATED IN METHOD OF RELATED ART

FIG. 17

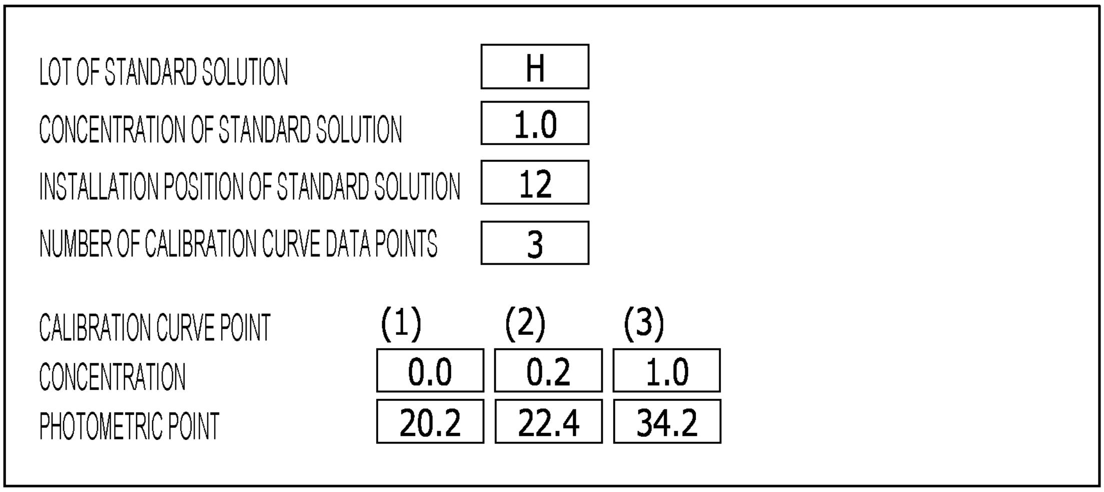
LOT OF STANDARD SOLUTION
H
CONCENTRATION OF STANDARD SOLUTION
1.0
INSTALLATION POSITION OF STANDARD SOLUTION
12
NUMBER OF CALIBRATION CURVE DATA POINTS
3
CALIBRATION CURVE POINT
(1)
(2)
(3)
CONCENTRATION
0.0
0.2
1.0
PHOTOMETRIC POINT
20.2
22.4
34.2

FIG. 18

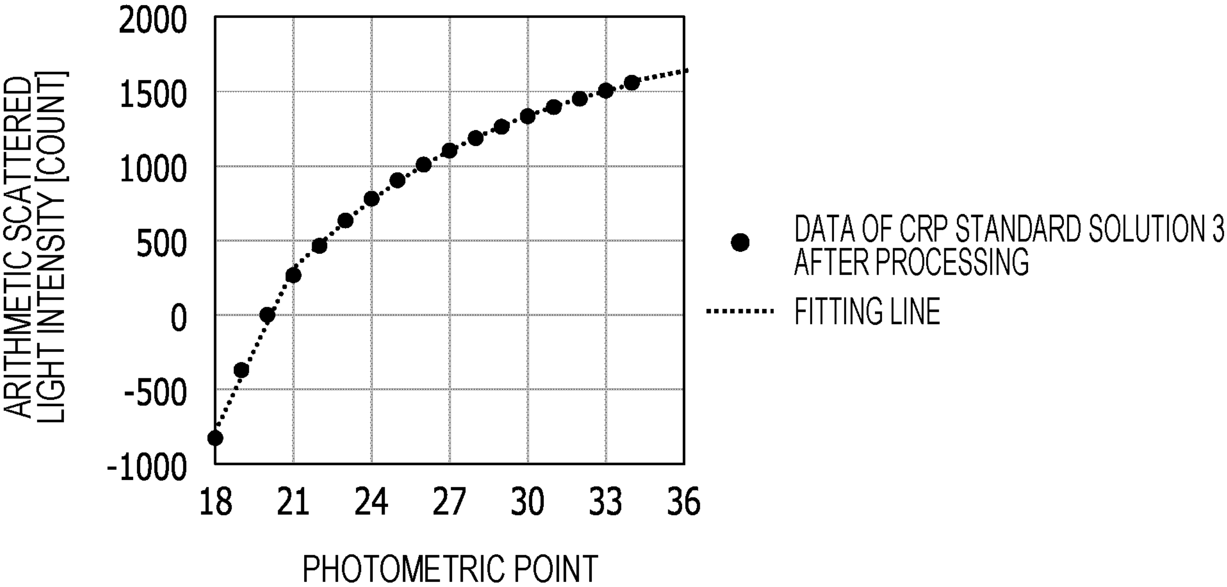
ARITHMETIC SCATTERED LIGHT INTENSITY [COUNT]
2000
1500
1000
500
0
-500
-1000
18
21
24
27
30
33
36
PHOTOMETRIC POINT
DATA OF CRP STANDARD SOLUTION 3 AFTER PROCESSING
FITTING LINE

FIG. 19

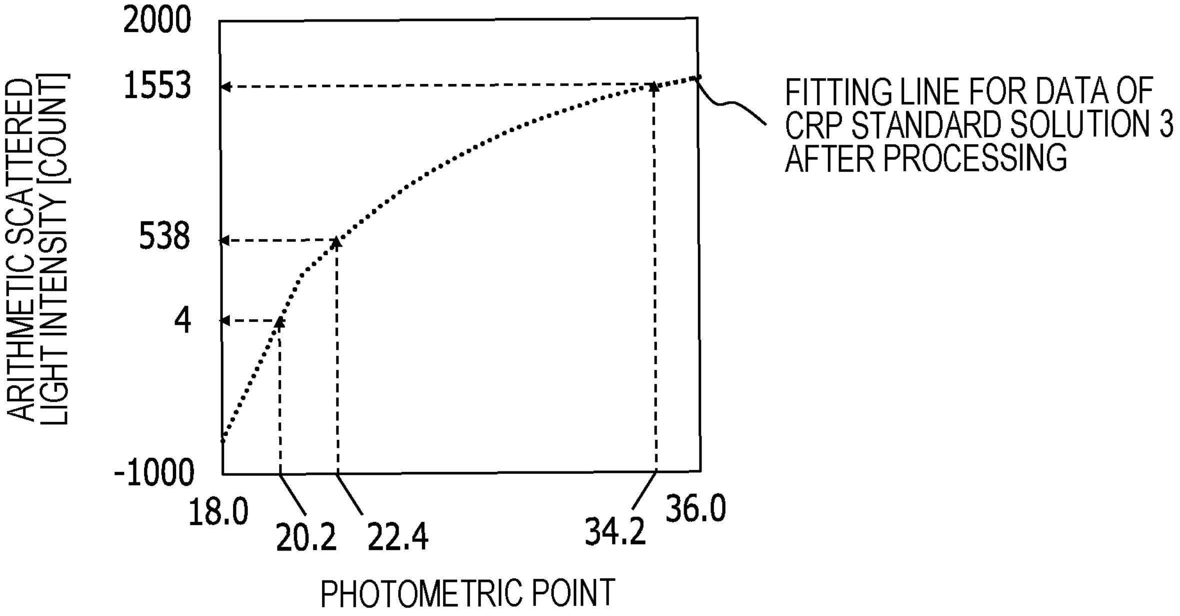
2000
1553
538
4
-1000
ARITHMETIC SCATTERED LIGHT INTENSITY [COUNT]
18.0
20.2
22.4
34.2
36.0
PHOTOMETRIC POINT
FITTING LINE FOR DATA OF CRP STANDARD SOLUTION 3 AFTER PROCESSING

FIG. 20

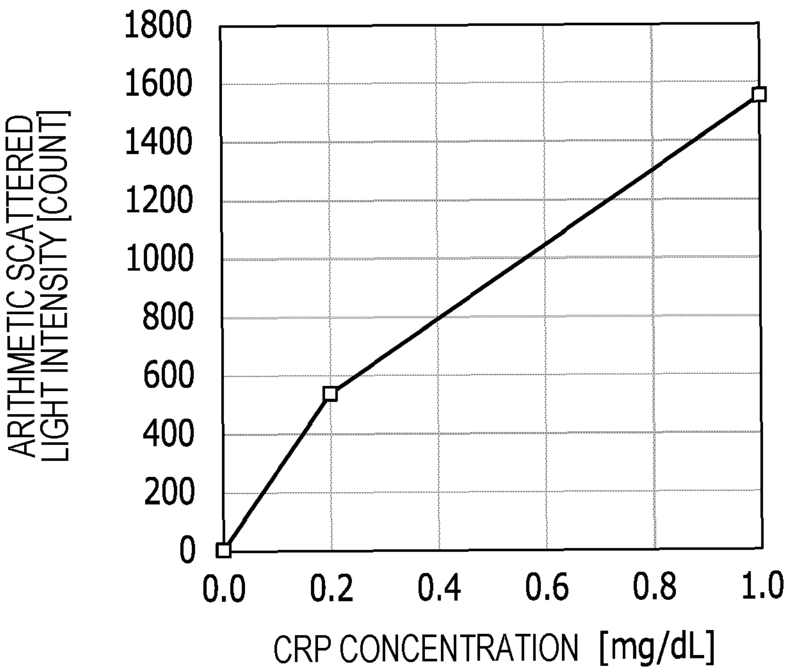
1800
1600
1400
1200
1000
800
600
400
200
0
ARITHMETIC SCATTERED LIGHT INTENSITY [COUNT]
0.0
0.2
0.4
0.6
0.8
1.0
CRP CONCENTRATION [mg/dL]

FIG. 21

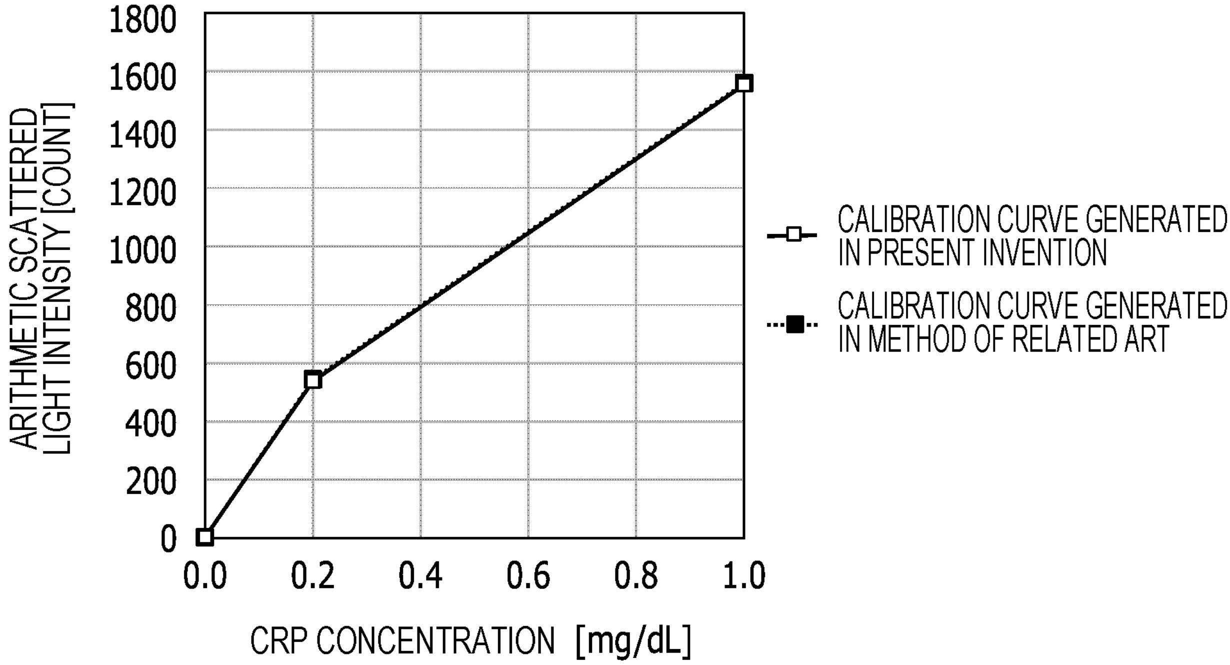

ARITHMETIC SCATTERED LIGHT INTENSITY [COUNT]
1800
1600
1400
1200
1000
800
600
400
200
0
0.0
0.2
0.4
0.6
0.8
1.0
CRP CONCENTRATION [mg/dL]
CALIBRATION CURVE GENERATED IN PRESENT INVENTION
CALIBRATION CURVE GENERATED IN METHOD OF RELATED ART


FIG. 22

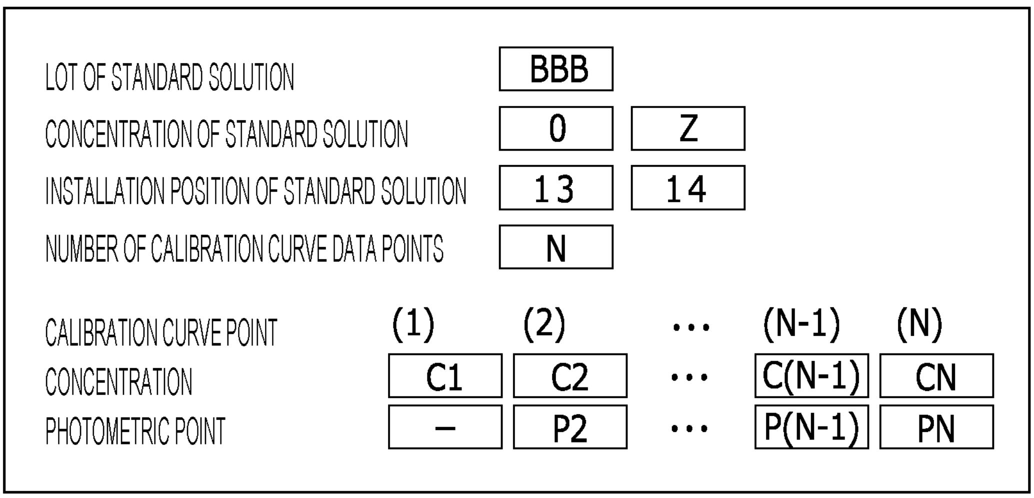

LOT OF STANDARD SOLUTION
BBB
CONCENTRATION OF STANDARD SOLUTION
0
Z
INSTALLATION POSITION OF STANDARD SOLUTION
13
14
NUMBER OF CALIBRATION CURVE DATA POINTS
N
CALIBRATION CURVE POINT
(1)
(2)
...
(N-1)
(N)
CONCENTRATION
C1
C2
...
C(N-1)
CN
PHOTOMETRIC POINT
–
P2
...
P(N-1)
PN

FIG. 23

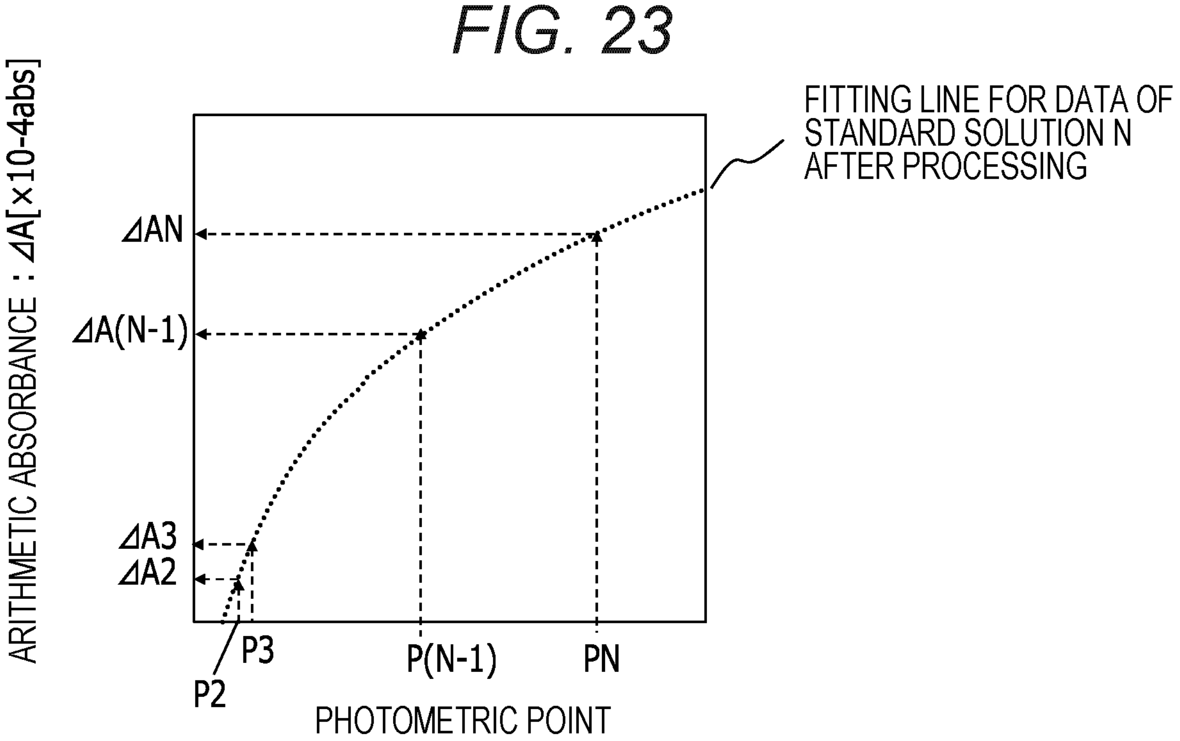
FITTING LINE FOR DATA OF STANDARD SOLUTION N AFTER PROCESSING
ARITHMETIC ABSORBANCE : ⊿A[×10-4abs]
⊿AN
⊿A(N-1)
⊿A3
⊿A2
P2
P3
P(N-1)
PN
PHOTOMETRIC POINT

FIG. 24

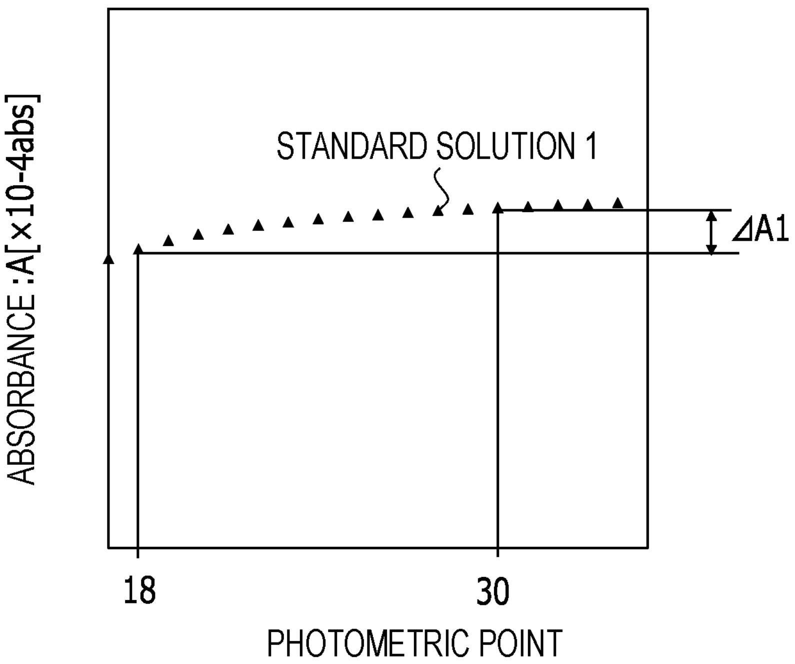
ABSORBANCE :A[×10-4abs]
STANDARD SOLUTION 1
⊿A1
18
30
PHOTOMETRIC POINT

FIG. 25

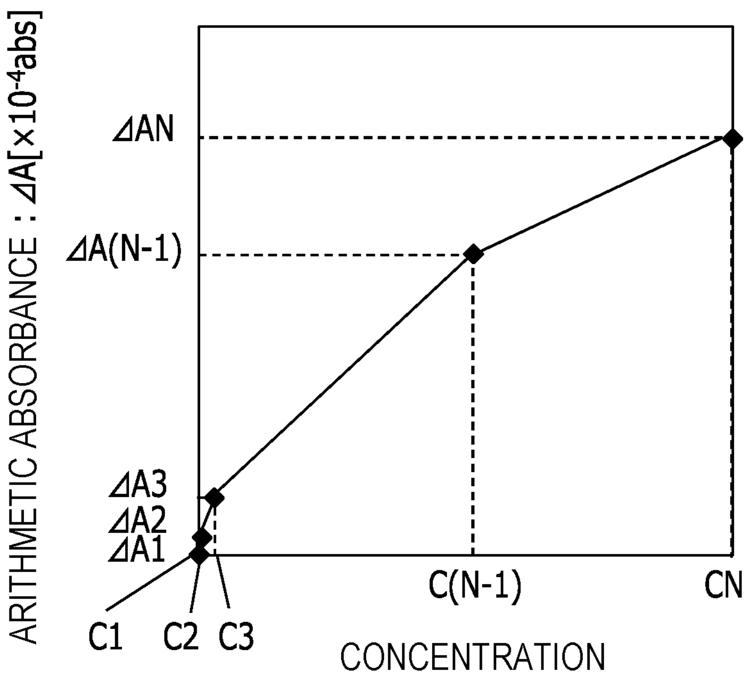
ARITHMETIC ABSORBANCE : ⊿A[×10⁻⁴abs]
⊿AN
⊿A(N-1)
⊿A3
⊿A2
⊿A1
C1
C2
C3
C(N-1)
CN
CONCENTRATION

## INTERNATIONAL SEARCH REPORT

International application No. PCT/JP2021/006352

A. CLASSIFICATION OF SUBJECT MATTER
Int.Cl. G01N35/00(2006.01)i, G01N21/27(2006.01)i, G01N21/59(2006.01)i
FI: G01N35/00A, G01N21/27F, G01N21/59Z

According to International Patent Classification (IPC) or to both national classification and IPC

B. FIELDS SEARCHED

Minimum documentation searched (classification system followed by classification symbols)
Int.Cl. G01N21/27, G01N21/59, G01N35/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-175342 A (HITACHI HIGH-TECHNOLOGIES CORP.) 12 August 2010 (2010-08-12) | 1-14 |
| A | JP 11-142412 A (HITACHI, LTD.) 28 May 1999 (1999-05-28) | 1-14 |
| A | JP 2001-249137 A (OLYMPUS OPTICAL CO., LTD.) 14 September 2001 (2001-09-14) | 1-14 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April 2021 | 27 April 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/006352

| | | |
|---|---|---|
| JP 2010-175342 A | 12 August 2010 | (Family: none) |
| JP 11-142412 A | 28 May 1999 | (Family: none) |
| JP 2001-249137 A | 14 September 2001 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001249137 A
- JP 2008175722 A